(19) Europäisches Patentamt
European Patent Office
Office européen des brevets

(11) **EP 3 239 109 A1**

(12) **EUROPEAN PATENT APPLICATION**

(43) Date of publication:
**01.11.2017 Bulletin 2017/44**

(21) Application number: **16167585.5**

(22) Date of filing: **28.04.2016**

(51) Int Cl.:
***C02F 11/14*** *(2006.01)* *C02F 1/52* *(2006.01)*
*C02F 1/56* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Omya International AG**
**4665 Oftringen (CH)**

(72) Inventors:
- **Poffet, Martine**
  **4600 Olten (CH)**
- **Jäggi, Pascal**
  **4632 Trimbach (CH)**
- **Gerard, Daniel E.**
  **4058 Basel (CH)**
- **Schoelkopf, Joachim**
  **5727 Oberkulm (CH)**

(74) Representative: **Glas, Holger**
**Maiwald Patentanwalts GmbH**
**Elisenhof**
**Elisenstrasse 3**
**80335 München (DE)**

(54) **SURFACE-TREATED MINERAL MATERIAL AND ITS USE IN WATER PURIFICATION**

(57) The present invention relates to a process for increasing the solids content of aqueous sludges and/or sediments, to the use of a surface-treated mineral material for increasing the solids content of sludges and/or sediments, and to a composite material comprising a surface-treated mineral material and impurities obtainable by said process.



Printed by Jouve, 75001 PARIS (FR)

**Description**

The present invention relates to a process for increasing the solids content of aqueous sludges and/or sediments, to the use of a surface-treated mineral material for increasing the solids content of sludges and/or sediments, and to a composite material comprising a surface-treated mineral material and impurities obtainable by said process.

Water pollution has posed a serious problem all over the world. In this regard, water pollution is suggested as being the leading cause of death and diseases in developing countries but also industrialized countries continue struggling with such pollution problems. In general, water, sludges and sediments are referred to as being polluted when impaired by anthropogenic contaminants and either does not support a human use, such as serving as drinking water, and/or has negative impacts on aquatic and/or land based flora and fauna.

The specific contaminants or impurities leading to pollution in water, sludges and sediments, include a wide variety of chemical substances, pathogens and physical or sensory changes such as elevated temperature bad smell and discoloration. In this regard, the chemical contaminants may include organic substances as well as inorganic substances. In particular, many of the inorganic components may also be naturally occurring (calcium salts, sodium salts, manganese salts etc.) so that their concentration is often the key in determining what is a natural water, sludge, or sediment component and what is a contaminant. Sources of such water, sludge or sediment pollutions typically originate from urban waste waters, or municipal waste water or from industrial waste waters. However, the contaminants and impurities may get in the natural water cycle and, therefore, the water, sludge and/or sediments comprising the contaminants or impurities may be, for example, lake water, river water, salty water such as for example brackish water, saline water or brine, sludges such as harbour sludge, ocean sludge or coastal sludge or suspended sediments from civil engineering such as drilling muds or brown coal sludge.

In the art, several approaches for the purification of polluted water and/or dewatering of sludges and/or suspended sediments have been proposed. For instance, one approach involves the addition of flocculants to remove or at least to reduce the amount of contaminants such as fine solids, micro-organisms and dissolved inorganic and organic materials. Flocculation refers to a process where dissolved compounds and/or colloidal particles are removed from the solution in the form of flocs or "flakes". The term is also used to refer to the process by which fine particulates are caused to clump together into flocs.

Flocculants, or flocculating agents, are chemicals that are used in water, especially in wastewater or in sludge and/or sediment treatment processes to promote flocculation.

Many flocculants are multivalent cations such as aluminium, iron, calcium or magnesium. These positively charged ions interact with negatively charged particles and molecules to reduce the barriers to aggregation. In addition, many of these chemicals, under appropriate pH and other conditions, react with water to form insoluble hydroxides which, upon precipitating, link together to form long chains or meshes, physically trapping small particles into the larger floc.

Common flocculants or coagulants used are aluminium sulphate or polyaluminium chloride (PAC). Aluminium sulphate reacts with water to form flocs of aluminium hydroxide. Coagulation with aluminium compounds may leave a residue of aluminium in the finished water, which can be toxic to humans at high concentrations. In solutions of polyaluminium chloride (PAC), aluminium ions have formed into polymers consisting of clusters of ions bridged by oxygen atoms. PAC is used e.g. for the treatment of brown drinking water comprising organic materials such as leaves and/or inorganic materials such as iron and manganese compounds which cause the brown discolouration. However, PAC is generally not sufficient to remove all brown discolouration from the water.

Iron(III) chloride is another common coagulant. Iron(III) coagulants work over a larger pH range than aluminium sulphate but are not effective with many source waters. Coagulation with iron compounds typically leaves a residue of iron in the finished water. This may impart a slight taste to the water, and may cause brownish stains on porcelain fixtures. Furthermore, iron(III) chloride impart corrosion risks in the water treatment system.

Further well-known flocculants for the water treatment based on a high specific surface area such as activated carbon or bentonite have the general drawback that they are very difficult to separate after the adsorption of the substance to be removed from the medium due to their finely divided state.

Another strategy involves the use of polymeric flocculation aids. A known polymeric flocculation aid is polyacrylamide. However, one problem with this approach is that these polymeric flocculation aids are usually overdosed to a large extent in order to ensure the agglomeration of all fine solid particles in the water to be treated. Thus, after the separation of the flocculated material from the water phase, the content of polyacrylamide in the filtrate is usually increased due to the high amounts of polymeric flocculating aids used. However, as there are severe environmental concerns regarding water containing polymeric flocculation aids, and especially polyacrylamide, the filtrate cannot be readily disposed in nature and, thus, further time and cost consuming purification steps are required to remove the polymeric flocculation aid from the filtrate.

Another approach involves the use of surface-treated calcium carbonate, wherein at least a part of the accessible surface area of the calcium carbonate is covered by a coating comprising at least one cationic polymer as disclosed in EP 2 589 430 or WO 2014/180631. In CA 2 734 310 the use of anchor particles bearing a tethering polymer is disclosed. The flocculation of dissolved compounds and/or colloidal particles by using solid materials, wherein the surface of these solid materials is treated with polycationic polymers is disclosed in EP 0 273 335.

However, one problem with this approach is that if the flocculated material is removed from the water phase, for example, by filtration the filter is blocked in relatively short time. Therefore, the water content in such obtained filter cakes is comparatively high resulting in a dramatically increased energy consumption on combustion. Additionally, such a filtration process is often very time consuming due to a low dewatering rate. Furthermore, the solid content in such treated sludges and/or sediments remains quite low since the obtained sludge and/or sediment is hard to dewater due to the above mentioned problems. This has the consequence that the handling is quite complicated as the sludge and/or sediment cannot be handled as a semi-solid material that could be shoveled with appropriate equipment such as mechanical digger for instance, but would still require some powerful pumping. Floating material on the surface can only be removed by skimming, which requires large tanks and the skimmed material nevertheless would need to undergo a dewatering step as with skimming also water will be removed and thus additional dewatering equipment needs to be put in place.

Therefore, there is a continuous need for alternative agents, substances or process conditions that can be used in sludge and/or sediment treatment process which provide a better performance than existing flocculants or processes or may be used for improving or supplementing the performance of existing agents, substances or process conditions.

In this respect, one object of the present invention may be seen in the provision of alternative agents, substances or process conditions which provide a better or supplementary performance than existing flocculants or processes and effectively increase the solids content of aqueous sludges and/or sediments to be treated.

Another object is the provision of alternative agents, substances or process conditions which provide a better or supplementary performance than existing flocculants or processes and effectively decrease the concentration of impurities in the filtered water of sludges and/or sediments to be treated while they preferably at the same time enable easy performance at low cost.

Another object of the present invention may be seen in the provision of agents, substances or process conditions that can be used in a process for increasing the solids content of sludges and/or sediments, which provide a better or supplementary performance than existing flocculants or processes and effectively result in a sludge or sediment having a relatively low water content based on the total weight of the obtained sludge or sediment.

A further object of the present invention may be seen in the provision of agents, substances or process conditions that facilitate the filtration of sludges or suspended sediments.

The foregoing and other objects are solved by the subject-matter of the present invention as defined in the independent claims.

A first aspect of the present invention relates to a process for increasing the solids content of aqueous sludges and/or sediments, comprising the following steps of:

a) providing aqueous sludge and/or sediment to be dewatered comprising impurities;

b) providing at least one surface-treated mineral material, wherein the mineral material prior to surface-treatment has a tapped bulk density measured according to the standard method ISO 787/11 of the dry powder from 0.05 g/mL to 0.80 g/mL and wherein the mineral material is surface-treated by a material which provides a cationic charge to the mineral material,

c) contacting sludge and/or sediment of step a) with the at least one surface-treated mineral material of step b) for obtaining a composite material of surface-treated mineral material and impurities and

d) removing water from the sludge and/or sediment comprising the composite material of step c).

The inventors surprisingly found that a surface-treated mineral material that may be obtained by surface-treating the mineral material with at least one material which provides a cationic charge to the mineral material, wherein the mineral material prior to surface-treatment has a tapped bulk density measured according to the standard method ISO 787/11 of the dry powder from 0.05 g/mL to 0.80 g/mL, may be effectively used for increasing the solids content of aqueous sludges and/or sediments. Furthermore, such a surface-treated mineral material may be used for the purification of water in aqueous sludges and/or sediments.

The inventors found that such surface-treated mineral material provides excellent binding activity for impurities in the aqueous sludge and/or sediment when the at least one surface-treated mineral material is at least partially applied onto the surface of the aqueous sludge and/or sediment to be treated or mixed with the aqueous sludge and/or suspended sediment to be treated. Furthermore, the inventors found that the blocking or clogging of the filter during filtration of such a stable suspension may be reduced or prevented and thus, the water content in such obtained filter cakes is comparatively low resulting in a dramatically decreased energy consumption on combustion and, therefore, in reduced energy costs. Therefore, an effective process for increasing the solids content of aqueous sludges and/or sediments is provided. It has been observed that the selection of the bulk density is crucial for the inventive process. It is assumed that the selected density range of the mineral material prior to surface-treatment of the dry powder from 0.05 g/mL to 0.80 g/mL reflects inter alia the porosity of the mineral material. Such a selection in combination with the surface treatment contributes to a significant extent to said increased solid content in the aqueous sludge and/or sediment.

Another aspect of the present invention relates to the use of a surface-treated mineral material for increasing the solids content of sludges and/or sediments, wherein the mineral material prior to surface-treatment has a tapped bulk density measured according to the standard method ISO 787/11 of the dry powder from 0.05 g/mL to 0.80 g/mL and wherein the mineral material is surface-treated by a material which provides a cationic charge to the mineral material.

Another aspect of the present invention relates to a composite material comprising a surface-treated mineral material and impurities obtainable by the process according to the present invention.

It should be understood that for the purposes of the present invention, the following terms have the following meaning:

The term "purification" in the meaning of the present invention refers to the reduction or removal of harmful compounds and/or other compounds not tolerated in the water. Furthermore, the term refers to the reduction in concentration of naturally occurring compounds in the water.

The term "impurities" in the meaning of the present invention refers to naturally occurring compounds, wherein their concentration in the water and/or sludge and/or sediment is above the natural concentration and/or compounds that are not naturally occurring.

The term "mineral material" in the meaning of the present invention refers to naturally occurring or synthetically produced substances that are solid under standard ambient temperature and pressure (SATP) which refers to a temperature of 25°C and an absolute pressure of exactly 100 kPa. The naturally occurring substances are inorganic and have a crystal structure or are amorphous.

The term "surface-treated" mineral material in the meaning of the present invention refers to a mineral material that has been processed with a material which provides a cationic charge to the mineral material, through an additional treatment step in order to render the surface of the mineral material particles more cationic. Where in this application it is described that a compound (especially the cationic polymer or the trivalent cation) is "coated onto" or "loaded onto" a (particulate) mineral material this means that said compound may be generally present on all or part of the sites of the particle which are directly accessible from the outside of said particle. These sites include the outer surface of a particle as well as pores or cavities being accessible from the outer surface.

The term "accessible surface area" or "accessible outer surface" in the meaning of the present invention refers to the surface of the mineral material particle that is accessible or exposed to the at least one material which provides a cationic charge to the mineral material applied by mixing and/or coating techniques known to the skilled person and thereby forming a monolayer of cationic surface-treatment material on the surface of the mineral material particle. In this regard, it should be noted that the amount of cationic surface-treatment material required for full saturation of the accessible surface area is defined as a monolayer concentration. Higher concentrations thus can be chosen by forming bilayered or multi-layered structures on the surface of the mineral material particle. Such monolayer concentrations can be readily calculated by the skilled person, based on the publication of Papirer, Schultz and Turchi (Eur. Polym. J., Vol. 20, No. 12, pp. 1155-1158, 1984).

The term "particulate" in the meaning of the present application refers to materials composed of a plurality of particles. Said plurality of particles may be defined, for example, by its particle size distribution.

The term "material which provides a cationic charge to the mineral material" in the meaning of the present invention refers to any surface-treatment material or coating material providing a positive overall charge when bound to the mineral particles. The term "mono-, di-, or trivalent cations" refers to cations that have one, two or three positive loadings, for example $Fe^{3+}$-ions, $Al^{3+}$-ions, $Mn^{2+}$-ions or $Zn^{2+}$-ions. The term "cationic polymer" in the meaning of the present invention refers to any polymer providing for a positive overall charge when bound to mineral material particles. Thus, the presence of anionic monomer units is not excluded as long as there are still sufficient cationic monomer units providing a positive overall charge. The same applies for amphotheric polymers which provide for an overall positive charge when bound to the mineral material particles.

The term "tapped bulk density" in the meaning of the present invention refers to the density of a powder depending on how closely individual particles pack together. The bulk density is affected not only by the true density of the solids, but by the particle size distribution, particle shape and cohesiveness. Handling or vibration of powdered material can overcome the cohesive forces and allow particles to move relative to one another and so smaller particles can work their way into the spaces between the larger particles. The total volume occupied by the powder decreases and its density increases. Ultimately no further natural particle packing can be measured without the addition of pressure. At this stage, maximum particle packing has been achieved. Under controlled conditions of tap rate, drop height and container size, the condition of maximum packing efficiency is highly reproducible. Thus, a tap density can be accurately measured. This tap density measurement is formalized in ISO 787/11 (787-11:1981 "General methods of test for pigments and extenders -- Part 11:

Determination of tamped volume and apparent density after tamping"). Automated tap density determinations can also be performed.

In the context of the present invention, the term "pore" is to be understood as describing the space that is found between and/or within particles, i.e. that is formed by the particles as they pack together under nearest neighbour contact (interparticle pores), such as in a powder or a compact and/or the void space within porous particles (intraparticle pores), and that allows the passage of liquids under pressure when saturated by the liquid and/or supports absorption of surface wetting liquids.

The "intraparticle intruded specific pore volume" according to the present invention can be calculated from a mercury intrusion porosimetry measurement and describes the measured pore volume that is found inside the particles per unit mass of sample containing the particles. The intruded total specific void volume represents the sum of all the individual pore volumes, which can be intruded by mercury, per unit mass of the sample can be measured by mercury porosimetry using a Micrometrics Autopore IV mercury porosimeter. An exemplary mercury porosimetry experiment entails the evacuation of a porous sample to remove trapped gases, after which the sample is surrounded with mercury. The amount of mercury displaced by the sample allows calculation of the sample's bulk volume, Vbulk. Pressure is then applied to the mercury so that it intrudes into the sample through pores connected to the external surface. The maximum applied pressure of mercury can be 414 MPa, equivalent to a Laplace throat diameter of 0.004 μm. The data can be corrected using Pore-Comp (P. A. C. Gane et al. "Void Space Structure of Compressible Polymer Spheres and Consolidated Calcium Carbonate Paper-Coating Formulations", Industrial and Engineering Chemistry Research 1996, 35 (5):1753-1764) for mercury and penetrometer effects, and also for sample compression. By taking the first derivative of the cumulative intrusion curves the pore size distributions based on equivalent Laplace diameter, inevitably including the effect of pore-shielding when present, are revealed. The intruded total specific void volume corresponds to the void volume per unit mass of the sample determined by mercury porosimetry.

The term "solid" refers to a physical state of a material. Unless indicated otherwise, this physical state is to be observed at a temperature of 20°C.

The "absolute water solubility" of a compound is to be understood as the maximum concentration of a compound in water where one can observe a single phase mixture at 20°C under equilibrium conditions. The absolute water solubility is given in g compound per 100 g water.

The "particle size" of particulate materials herein is described by its distribution of particle sizes $d_x$. Therein, the value $d_x$ represents the diameter relative to which x % by weight of the particles have diameters less than $d_x$. This means that, for example, the $d_{20}$ value is the particle size at which 20 wt.-% of all particles are smaller than that particle size. The $d_{50}$ value is thus the weight median particle size, i.e. 50 wt.-% of all particles are bigger and 50 wt.-% are smaller than that particle size. For the purpose of the present invention, the particle size is specified as weight median particle size $d_{50}$ unless indicated otherwise. Particle sizes were determined by using a Sedigraph™ 5100 instrument of Micromeritics Instrument Corporation. The method and the instrument are known to the skilled person and are commonly used to determine the particle size of fillers and pigments. The measurements were carried out in an aqueous solution of 0.1 wt.-% $Na_4P_2O_7$.

The "specific surface area" (expressed in $m^2/g$) of a material as used throughout the present document can be determined by the Brunauer Emmett Teller (BET) method with nitrogen as adsorbing gas and by use of a Gemini V instrument from Micromeritics. The method is well known to the skilled person and defined in ISO 9277:1995. Samples are conditioned at 250°C for a period of 30 min prior to measurement. The total surface area (in $m^2$) of said material can be obtained by multiplication of the specific surface area (in $m^2/g$) and the mass (in g) of the material.

If necessary, the "solids content" of a suspension given in wt.-% as well as the "water content" of the composite material given in wt.-% in the meaning of the present invention can be determined using a Moisture Analyzer HR73 from Mettler-Toledo (T = 120°C, automatic switch off 3, standard drying) with a sample size of 5 to 20 g.

Unless specified otherwise, the term "drying" refers to a process according to which at least a portion of water is removed from a material to be dried such that a constant weight of the obtained "dried" material at 120°C is reached. Moreover, a "dried" or "dry" material is defined by its total moisture content which, unless specified otherwise, is less than or equal to 1.0 wt.-%, preferably less than or equal to 0.5 wt.-%, more preferably less than or equal to 0.2 wt.-%, and most preferably between 0.03 and 0.07 wt.-%, based on the total weight of the dried material.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

Advantageous embodiments of the inventive process as well as of its use are defined in the corresponding subclaims.

According to one embodiment of the present invention the sludge and/or sediment of step a) comprises sludge such as harbour sludge, river sludge, coastal sludge or digested sludge, mining sludge, municipal sludge, civil engineering sludge, drilling mud, sludge from oil drilling, waste water or process water from breweries or other beverage industries, waste water or process water in the paper industry, colour-, paints-, or coatings industry, agricultural waste water, slaughterhouse waste water, leather industry waste water and leather tanning industry.

According to another embodiment of the present invention the at least one surface-treated mineral material of step b) comprises magnesium and/or calcium carbonate comprising mineral materials and/or aluminium or aluminosilicate comprising mineral materials and/or phyllosilicates and is preferably selected from the group consisting of pumice, scorea, tuff, MCC, kaolin, bentonite, alumina, bauxite, gypsum, magnesium carbonate, perlite, dolomite, diatomite, huntite, magnesite, boehmite, palygorskite, mica, vermiculite, hydrotalcite, hectorite, halloysite, gibbsite, kaolinite, montmorillonite, illite, attapulgite, laponite, sepiolite, hydromagnesite, zeolite and mixtures thereof, more preferably is selected from the group consisting of MCC, huntite, perlite, hydromagnesite, zeolite, bentonite and mixtures thereof and most preferably is selected from the group consisting of hydromagnesite, zeolite and mixtures thereof.

According to another embodiment of the present invention mineral material particles of the at least one surface-treated mineral material prior to surface-treatment have a weight median particle diameter $d_{50}$ value of between 1.0 μm and 300 μm, preferably between 1 μm and 200 μm, more preferably between 2 μm and 50 μm, even more preferably between 3 μm and 30 μm, and most preferably between 4 μm and 25 μm and/or the mineral material of the at least one surface-treated mineral material prior to surface-treatment has a tapped bulk density measured according to the standard method ISO 787/11 of the dry powder from 0.07 g/mL to 0.60 g/mL, preferably from 0.08 g/mL to 0.40 g/mL, and most preferably from 0.10 g/mL to 0.20 g/mL and/or the mineral material particles of the at least one surface-treated mineral material prior to surface-treatment have a specific surface area of from 1 to 800 $m^2/g$, more preferably from 20 to 500 $m^2/g$, even more preferably from 30 to 300 $m^2/g$ and most preferably from 30 to 150 $m^2/g$.

According to another embodiment of the present invention the surface-treatment of the at least one surface-treated mineral material comprises at least one material which provides a cationic charge to the mineral material selected from the group consisting of mono-, di-, or trivalent cations, cationic polymers and mixtures thereof.

According to another embodiment of the present invention the cationic polymers comprise polymers having a positive charge density in the range of 1 mEq/g and 15 mEq/g, more preferably in the range of 2.5 mEq/g and 12.5 mEq/g and most preferably in the range of 5 mEq/g and 10 mEq/g and/or in which at least 60 % of the monomer units have a cationic charge, preferably at least 70 %, more preferably at least 80 %, even more preferably at least 90 % and most preferably equal to 100 % and/or having a weight average molecular weight $M_w$ of below 1,000,000 g/mole, more preferably from 50,000 to 750,000 g/mole, even more preferably from 50,000 to 650,000 g/mole and most preferably from 100,000 to 300,000 g/mole and/or being a homopolymer based on monomer units selected from the group consisting of diallyldialkyl ammonium salts; tertiary and quaternized amines; quaternized imines; acrylamide; methacrylamide; N,N-dimethyl acrylamide; acrylic acid; methacrylic acid; vinylsulfonic acid; vinyl pyrrolidone; hydroxyl ethyl acrylate; styrene; methyl methacrylate and vinyl acetate, preferably diallyldialkyl ammonium salts and acrylic acid, or being a copolymer based on monomer units selected from diallyldialkyl ammonium salts and methacrylic acid and comonomer units selected from the group consisting of acrylamide; methacrylamide; N,N-dimethyl acrylamide; acrylic acid; methacrylic acid; vinylsulfonic acid; vinyl pyrrolidone; hydroxyl ethyl acrylate; styrene; methyl methacrylate; vinyl acetate and mixtures thereof, preferably the monomer units are selected from diallyldialkyl ammonium salts and methacrylic acid and comonomer units selected from acrylamide and acrylic acid.

According to another embodiment of the present invention the mono-, di-, or trivalent cations are selected from $Fe^{3+}$, $Al^{3+}$, $Mn^{2+}$ $Zn^{2+}$ and mixtures thereof.

According to another embodiment of the present invention at least 0.1 % of the accessible surface area of the mineral material is surface-treated with the at least one material which provides a cationic charge to the mineral material, preferably between 0.2 % and 50 %, more preferably between 0.5 % and 30 %, even more preferably between 0.7 % and 20 % and most preferably between 1.0 % and 10 %.

According to another embodiment of the present invention the process further comprises step e) of contacting the sludge and/or sediment to be dewatered of step a) or c) with at least one polymeric flocculation aid.

According to another embodiment of the present invention the polymeric flocculation aid of step e) has a weight average molecular weight $M_w$ in the range from 100,000 to 10,000,00 g/mole, preferably in the range from 300,000 to 5,000,000 g/mole, more preferably in the range from 300,000 to 1,000,000 g/mole and most preferably in the range from 300,000 to 800,000 g/mole and/or is non-ionic or ionic, preferably a cationic or anionic polymer selected from polyacrylamides, polyacrylates, poly(diallyldimethylammonium chloride), polyethyleneimines, polyamines, starches and mixtures thereof.

According to another embodiment of the present invention step d) is performed by filtration, sedimentation and/or centrifugation and preferably by filtration.

According to another embodiment of the present invention the process further comprises a step of adding an anionic polymer before step d), preferably after step c).

According to another embodiment of the present invention the composite material has a water content of less than 90 wt.-% based on the total weight of the composite material after filtration from the sludges and/or sediments and before drying, preferably below 80 wt.-%, more preferably below 60 wt.-%, even more preferably below 50 wt.-% and most preferably below 30 wt.-%,.

As set out above the inventive process for increasing the solids content of aqueous sludges and/or sediments comprises the steps a), b), c) and d). In the following, it is referred to further details of the present invention and especially the foregoing steps of the inventive process for the purification of water and/or dewatering of sludges and/or sediments.

Step a): provision of aqueous sludge and/or sediment to be dewatered

According to step a) of the process of the present invention, aqueous sludge and/or sediment to be dewatered is provided, wherein the sludge and/or sediment comprises impurities.

The sludge and/or sediment comprises sludge such as harbour sludge, river sludge, coastal sludge or digested sludge, mining sludge, municipal sludge, civil engineering sludge, drilling mud, sludge from oil drilling, waste water or process water from breweries or other beverage industries, waste water or process water in the paper industry, colour-, paints-, or coatings industry, agricultural waste water, slaughterhouse waste water, leather industry waste water and leather tanning industry.

Within the context of the present invention, the term "process water" refers to any water which is necessary to run or maintain an industrial process. The term "waste water" refers to any water drained from its place of use, e.g. an industrial plant.

The term "sludge" in the meaning of the present invention refers to any kind of sludge, e.g. primary sludge, biological sludge, mixed sludge, digested sludge, physico-chemical sludge and mineral sludge. In this regard, primary sludge comes from the settling process and usually comprises large and/or dense particles. Biological sludge comes from the biological treatment of wastewater and is usually made of a mixture of microorganisms. These microorganisms, mainly bacteria, amalgamate in bacterial flocs through the synthesis of exo-polymers. Mixed sludge is a blend of primary and biological sludges and usually comprises 35 wt.-% to 45 wt.-% of primary sludge and 65 wt.-% to 55 wt.-% of biological sludge. Digested sludge comes from a biological stabilizing step in the process called digestion and is usually performed on biological or mixed sludge. It can be done under different temperatures (mesophilic or thermophilic) and with or without the presence of oxygen (aerobic or anaerobic). Physico-chemical sludge is the result of a physico-chemical treatment of the wastewater and is composed of flocs produced by the chemical treatment. Mineral sludge is given to sludge produced during mineral processes such as quarries or mining beneficiation processes and essentially comprises mineral particles of various sizes).

Within the context of the present invention, the term "sediment" refers to any water containing particles of naturally occurring material.

Preferably, the sludge and/or sediment to be treated comprises organic impurities and/or inorganic impurities.

In accordance with the process of the present invention, the sludge and/or sediment to be treated comprise inorganic impurities. The term "inorganic impurities" in the meaning of the present invention refers to naturally occurring compounds, wherein their concentration in the water and/or sludge and/or sediment is above the natural concentration typically observed in water and/or compounds that are not naturally occurring.

In particular, many inorganic impurities are typically present as dissolved inorganics, i.e. inorganic substances in solution, such as bicarbonates of calcium and/or magnesium, which give rise to temporary hardness, while the sulfates and chlorides cause permanent hardness. Other inorganic impurities present in water and/or sludge and/or sediment include carbon dioxide, which dissolves in water to give weakly acidic carbonic acid, sodium salts, silicates leached from sandy river beds, chlorides from saline intrusion, aluminium from dosing chemicals and minerals, phosphates from fertilizers, fluoride compounds derived from additives promoting strong teeth and as discharge from fertilizer and aluminum factories, nitrate and nitrite compounds derived as runoff from fertilizer use as well as leaking from septic tanks, sewage or chlorine derived from the chlorination of the municipal system to combat water-borne diseases and cyanide compounds derived as discharge from steel and metal factories as well as plastic and fertilizer factories.

If the sludge and/or sediments to be treated comprises heavy metal impurities, they are typically ferrous and ferric iron compounds derived from minerals and rusty iron pipes; antimony compounds derived as discharge from petroleum refineries, fire retardants or electronics; arsenic compounds derived from erosion of natural deposits, runoff from orchards, runoff from glass and electronics production wastes; barium compounds as discharge of drilling wastes and from metal refineries; beryllium compounds derived as discharge from metal refineries and coal-burning factories as well as electrical, aerospace, and defense industries; cadmium compounds derived from corrosion processes of galvanized pipes, discharge from metal refineries and runoff from waste batteries and paints; chromium compounds derived from discharge from steel and pulp mills; cobalt and nickel compounds derived as discharge from metal refineries and runoff from waste batteries; copper and lead compounds derived from corrosion processes of household plumbing systems; selenium compounds derived as discharge from petroleum refineries and mines such as mines for metal or metal ore extraction or any other mines producing polluted sludge; thallium compounds derived as leaching from ore-processing sites as well as discharge from electronics, glass, and drug factories or zinc, or mercury compounds derived from mining, smelting metals (like zinc, lead and cadmium) and steel production, as well as burning coal and certain wastes can release zinc into the environment.

Furthermore, the sludge and/or sediment to be treated may also comprise organic impurities. In the context of the present invention, the term "organic impurities" has to be interpreted broadly and encompasses specific organic compounds such as surfactants, polycyclic compounds, cholesterol, or endocrine disrupting compounds as well as more complex organic materials (e.g. organic material from microorganisms).

Impurities within the meaning of the present invention shall encompass organic, inorganic, biological, mineral impurities or combinations thereof, wherein said impurities can be present in dissolved, dispersed, or emulsified forms as well as in colloidal form or adsorbed to solids, as well as in combination thereof, or still other forms.

Preferably, the sludge and/or sediment to be purified includes at least one of the following organic impurities which are selected from the group consisting of surfactants; cholesterol; endocrine disrupting compounds; amino acids; proteins; carbohydrates; defoamers; sizing agents selected from the group consisting of alkyl ketene dimer (AKD), alkenyl succinic anhydride (ASA), or mixtures thereof; polyvinylacetates; polyacrylates, in particular polyacrylate latex; styrene butadiene copolymers, in particular styrene butadiene latex; microorganisms; mineral oils; vegetable oils and fats; or any mixture thereof.

In another preferred embodiment of the process of the present invention, the organic impurities also comprise pitch. The term "pitch" as used in the present invention refers to a specific type of organic material generated in the papermaking or pulping process. The primary fibre source in papermaking is wood, which is reduced to its constituent fibres during pulping by combinations of grinding, thermal and chemical treatment. During this process the natural resin contained within the wood is released into the process water in the form of microscopic droplets. These droplets are referred to as pitch. The chemical composition of pitch is generally divided into four classes of lipophilic components: fats and fatty acids; steryl esters and sterols; terpenoids; and waxes. The chemical composition depends on the fibre source, such as variety of tree, and on the seasonal growth from which the sample is produced.

If the organic component is a surfactant, the surfactant can be ionic or non-ionic. If the surfactant is anionic, it can have a functional group selected from carboxylate, sulfate, or sulfonate. If the surfactant is cationic, its functional group can be a quaternary ammonium group.

If the sludge and/or sediment to be treated comprises endocrine disrupting compounds, they are preferably selected from the group comprising, e.g. endogenous hormones such as 17β-estradiol (E2), estrone (E1), estriol (E3), testosterone or dihydro testosterone; phyto and myco hormones such as β -sitosterol, genistein, daidzein or zeraleon; drugs such as 17 β -ethinylestradiol (EE2), mestranol (ME), diethylstilbestrol (DES), and industrial chemicals such as 4-nonyl phenol (NP), 4-tert-octyl phenol (OP), bisphenol A (BPA), tributyltin (TBT), methylmercury, phthalates, PAK or PCB.

If the sludge and/or sediment to be treated comprises defoamer, it can be ethylene oxide glycol ether, a silicone oil based defoamer, a fatty acid ester defoamer, or any mixture thereof. The defoamer may be preferably selected from stickies. Stickies are potentially deposit-forming components originating from recycled paper. In general, examples are glues, hot-melt plastics, printing inks, and latex. The papermaking industry utilizes various amounts of recycled fiber or papers as a source of paper fiber furnish in the production of finished paper products. The recycled papers are often contaminated with the synthetic polymeric materials outlined above and these polymeric materials are referred to as stickies in the papermaking art. Stickies are different from pitch which is a naturally occurring resinous material from the extractive fraction of wood. Reference is made to E.L. Back and L.H. Allen, "Pitch Control, Wood Resin and Deresination", Tappi Press, Atlanta, 2000, wherein stickies are described in further detail.

If the sludge and/or sediment to be treated comprises microorganisms, they are preferably selected from bacteria, fungi, archaea or protists.

Preferred vegetable oils are edible oils such as coconut oil, corn oil, cottonseed oil, canola oil, palm oil, soybean oil, sunflower oil, or linseed oil.

The exact composition of the sludge and/or sediment to be purified and especially the amount of inorganic and/or organic impurities varies depending on the origin of the polluted water and/or sludge and/or sediment.

Step b): provision of at least one surface-treated mineral material

According to step b) of the process of the present invention, at least one surface-treated mineral material is provided.

The expression "at least one" surface-treated mineral material means that one or more kinds of surface-treated mineral materials may be provided in the instant process.

In accordance with the inventive process the mineral material prior to surface-treatment has a tapped bulk density measured according to the standard method ISO 787/11 of the dry powder from 0.05 g/mL to 0.80 g/mL and wherein the mineral material is surface-treated by a material which provides a cationic charge to the mineral material.

According to one embodiment of the present invention the at least one surface-treated mineral material of step b) comprises magnesium and/or calcium carbonate comprising mineral materials and/or aluminium or aluminosilicate comprising mineral materials and/or phyllosilicates and is preferably selected from the group consisting of pumice, scorea, tuff, MCC, kaolin, bentonite, alumina, bauxite, gypsum, magnesium carbonate, perlite, dolomite, diatomite, huntite, magnesite, boehmite, palygorskite, mica, vermiculite, hydrotalcite, hectorite, halloysite, gibbsite, kaolinite, montmorillonite, illite, attapulgite, laponite, sepiolite, hydromagnesite, zeolite and mixtures thereof, more preferably is selected from the group consisting of MCC, huntite, perlite, hydromagnesite, zeolite, bentonite and mixtures thereof and most preferably is selected from the group consisting of hydromagnesite, zeolite and mixtures thereof.

The term "magnesium and/or calcium carbonate comprising mineral material" in the meaning of the present invention refers to mineral materials that comprise magnesium carbonate or calcium carbonate or magnesium carbonate and calcium carbonate.

According to one embodiment of the present invention the mineral material comprises natural calcium carbonate (GCC), and/or synthetic or precipitated calcium carbonate (PCC) and/or surface modified calcium carbonate (MCC).

"Ground calcium carbonate" (GCC) in the meaning of the present invention is a calcium carbonate obtained from natural sources, such as limestone, marble or chalk or dolomite, and processed through a treatment such as grinding, screening and/or fractionizing by a wet and/or dry process, for example, by means of a cyclone or classifier. "Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water. "Surface-modified calcium carbonate" (MCC) in the meaning of the present invention refers to a natural calcium carbonate and/or precipitated calcium carbonate obtained by reacting it with an acid or ion and with carbon dioxide prior to the preparation of the surface-treated calcium carbonate, wherein the carbon dioxide is formed in situ by the acid treatment and/or is supplied from an external source.

According to one embodiment the calcium carbonate is present in the mineral material in an amount from 0 wt.-% to 50 wt.-%, based on the total weight of the mineral material, preferably in an amount from 0 wt.-% to 40 wt.-%, more preferably in an amount from 0 wt.-% to 25 wt.-%, even more preferably in an amount from 0 wt.-% to 10 wt.-%, even more preferably in an amount from 0 wt.-% to 5 wt.-%, and most preferably in an amount from 0 wt.-% to 1 wt.-%, based on the total weight of the mineral material. According to a preferred embodiment of the present invention no ground or natural calcium carbonate (GCC), and/or synthetic or precipitated calcium carbonate (PCC) and/or surface modified calcium carbonate (MCC) is present at all in the mineral material.

The at least one magnesium and/or calcium carbonate comprising mineral material is preferably a magnesium carbonate comprising mineral material and more preferably is selected from gypsum, huntite, perlite, dolomite, magnesite or hydromagnesite and most preferably is selected from huntite or hydromagnesite. Gypsum has the chemical formula $CaSO_4 \cdot 2H_2O$. Huntite has the chemical formula $Mg_3Ca(CO_3)_4$ and crystallizes in the trigonal system. Perlite is an amorphous volcanic glass with varying compositions comprising $SiO_2$, $Al_2O_3$, $Na_2O$, $K_2O$, $Fe_2O_3$, MgO and CaO. Dolomite has the chemical formula $CaMg(CO_3)_2$ and crystallizes in the trigonal crystal system. Hydromagnesite has the chemical formula $Mg_5(CO_3)_4(OH)_2 \cdot 4H_2O$ and crystallizes in the monoclinic prismatic crystal system. Magnesite has the chemical formula $Mg(CO_3)$.

The at least one magnesium and/or calcium carbonate comprising mineral material may comprise further mineral materials as byproducts, for example, serpentine a hydrous magnesium iron phyllosilicate having the chemical formula $(Mg, Fe)_3Si_2O_5(OH)_4$ and brucite having the chemical formula $Mg(OH)_2$. The byproducts may be present in the magnesium and/or calcium carbonate comprising mineral material in an amount of less than 20 wt.-%, preferably less than 15 wt.-%, more preferably less than 10 wt.-% and most preferably less than 5 wt.-%, based on the total weight of the magnesium and/or calcium carbonate comprising mineral material.

According to preferred embodiment of the present invention the at least one mineral material consists merely of magnesium and/or calcium carbonate comprising mineral materials and preferably consists of huntite and/or hydromagnesite. According to an exemplified embodiment of the present invention the at least one mineral material consists of hydromagnesite.

The term "aluminium or aluminosilicate comprising mineral material" in the meaning of the present invention refers to mineral materials that comprise minerals composed of aluminium and oxygen and optionally silicon and countercations.

The at least one aluminium comprising mineral material preferably comprises alumina, bauxite and mixtures thereof. Alumina or aluminium oxide has the chemical formula $Al_2O_3$. Bauxite, an aluminium ore consists mostly of the minerals gibbsite $Al(OH)_3$, boehmite $\gamma$-AlO(OH) and diaspore $\alpha$-AlO(OH).

The at least one aluminosilicate comprising mineral material preferably comprises zeolite. Zeolites in the meaning of the present invention have a porous structure that can accommodate a wide variety of cations, such as $Na^+$, $K^+$, $Ca^{2+}$, $Mg^{2+}$ and others. These positive ions are rather loosely held and can readily be exchanged for others in a contact solution. Zeolites comprise analcime having the chemical formula $NaAlSi_2O_6 \cdot H_2O$, chabazite with the chemical formula $(Ca,Na_2,K_2,Mg)Al_2Si_4O_{12} \cdot 6H_2O$, clinoptilolite having the chemical formula $(Na,K,Ca)_{2-3}Al_3(Al,Si)_2Si_{13}O_{36} \cdot 12H_2O$, heulandite having the chemical formula $(Ca,Na)_{2-3}Al_3(Al,Si)_2Si_{13}O_{36} \cdot 12H_2O$, natrolite having the chemical formula $Na_2Al_2Si_3O_{10} \cdot 2H_2O$, phillipsite with the chemical formula $(Ca,Na_2,K_2)_3Al_6Si_{10}O_{32} \cdot 12H_2O$ and stilbite having the chemical formula $NaCa_4(Si_{27}Al_9)O_{72} \cdot 28(H_2O)$.

According to preferred embodiment of the present invention the at least one mineral material consists merely of aluminium or aluminosilicate comprising mineral materials and preferably consists of zeolites. According to a more preferred embodiment of the present invention the at least one mineral material consists of clinoptilolite.

The at least one magnesium and/or calcium carbonate comprising mineral material may comprise further mineral materials as byproducts, for example, dolomite having the chemical formula $CaMg(CO_3)_2$, fluorite having the chemical formula $CaF_2$, galena having the chemical formula PbS, gypsum with the chemical formula $CaSO_4 \cdot 2H_2O$, rhodochrosite with the chemical composition $MnCO_3$, sphalerite having the chemical formula (Zn,Fe)S and stibnite, sometimes called antimonite, with the chemical formula $Sb_2S_3$. The byproducts may be present in the magnesium and/or calcium carbonate comprising mineral material in an amount of less than 20 wt.-%, preferably less than 15 wt.-%, more preferably less than 10 wt.-% and most preferably less than 5 wt.-%, based on the total weight of the magnesium and/or calcium carbonate comprising mineral material.

The mineral material may originate from volcanic rock like pumice, scorea or tuff. The term "phyllosilicate" in the meaning of the present invention refers to any sheet silicate mineral.

The at least one phyllosilicate is preferably bentonite. Accordingly, the at least one phyllosilicate preferably comprises bentonite, more preferably consists of bentonite.

If the at least one phyllosilicate comprises, preferably consists of, bentonite the bentonite is preferably selected from sodium bentonite, calcium bentonite, potassium bentonite and mixtures thereof.

It is appreciated that bentonite is preferably a natural material and thus its precise composition, the number of its constituents and the amount of the single constituents may vary in a broad range usually depending on the source of origin.

For example, the bentonite usually comprises, preferably consists of, various clay minerals such as in particular montmorillonite as the main component, but also quartz, kaolin, kaolinite, diatomite, mica, feldspar, pyrite, calcite, cristobalite, palygorskite or attapulgite, vermiculite, hydrotalcite, hectorite, halloysite, illite, laponite, sepiolite and mixtures thereof as concomitant minerals. These minerals may be present in variable amounts, as well as other components, depending on the site of origin.

According to one embodiment the bentonite comprises clay minerals selected from montmorillonites and concomitant minerals selected from the group comprising quartz, mica, kaolinite, feldspar, pyrite, cristobalite and mixtures thereof.

In one embodiment of the present invention, the at least one phyllosilicate comprises, preferably consists of, bentonite comprising montmorillonite.

Bentonite with a montmorillonite content of at least 50.0 wt.-%, preferably of at least 60.0 wt.-%, e.g. between 60.0 and 95.0 wt.-%, based on the total weight of the bentonite, is especially suitable as the at least one phyllosilicate of step c).

Additionally or alternatively, the bentonite comprises constituents selected from the group comprising $SiO_2$, $Al_2O_3$, CaO, $Fe_2O_3$, $K_2O$, MgO, $Na_2O$, $TiO_2$ and the like.

For example, the bentonite comprises $SiO_2$ in an amount of at least 50.0 wt.-%, preferably from 50.0 to 95.0 wt.-% e.g. from 50.0 to 80.0 wt.-%, based on the total weight of the bentonite. Additionally or alternatively, the bentonite comprises $Al_2O_3$ in an amount of at least 10.0 wt.-%, preferably from 10.0 to 40.0 wt.-% e.g. from 10.0 to 30.0 wt.-%, based on the total weight of the bentonite.

Additionally or alternatively, the bentonite comprises CaO, $Fe_2O_3$, $K_2O$, MgO, $Na_2O$ and/or $TiO_2$ in an amount of below 20.0 wt.-%, preferably from 5.0 to 20.0 wt.-% e.g. from 5.0 to 15.0 wt.-%, based on the total weight of the bentonite. For example, the bentonite comprises CaO in an amount of below 10.0 wt.-%, preferably from 0.5 to 10.0 wt.-% e.g. from 0.5 to 5.0 wt.-%, based on the total weight of the bentonite. For example, the bentonite comprises $Fe_2O_3$ in an amount of below 10.0 wt.-%, preferably from 1.0 to 10.0 wt.-% e.g. from 2.5 to 7.5 wt.-%, based on the total weight of the bentonite. For example, the bentonite comprises $K_2O$ in an amount of below 10.0 wt.-%, preferably from 0.5 to 10.0 wt.-% e.g. from 0.5 to 5.0 wt.-%, based on the total weight of the bentonite. For example, the bentonite comprises MgO in an amount of below 10.0 wt.-%, preferably from 0.5 to 10.0 wt.-% e.g. from 0.5 to 5.0 wt.-%, based on the total weight of the bentonite. For example, the bentonite comprises $Na_2O$ in an amount of below 5.0 wt.-%, preferably from 0.05 to 5.0 wt.-% e.g. from 0.05 to 2.5 wt.-%, based on the total weight of the bentonite. For example, the bentonite comprises $TiO_2$ in an amount of below 5.0 wt.-%, preferably from 0.05 to 5.0 wt.-% e.g. from 0.05 to 2.5 wt.-%, based on the total weight of the bentonite.

The mineral material prior to surface-treatment has a tapped bulk density measured according to the standard method ISO 787/11 of the dry powder from 0.05 g/mL to 0.80 g/mL, preferably from 0.07 g/mL to 0.60 g/mL, more preferably from 0.08 g/mL to 0.40 g/mL, and most preferably from 0.10 g/mL to 0.20 g/mL.

According to one embodiment of the present invention the mineral material particles prior to surface-treatment may have a weight median particle diameter $d_{50}$ value of between 1.0 μm and 300 μm, preferably between 1 μm and 200 μm, more preferably between 2 μm and 50 μm, even more preferably between 3 μm and 30 μm, and most preferably between 4 μm and 25 μm.

The mineral material particles prior to surface-treatment may have a $d_{98}$ of less than 500 μm, preferably of less than 300 μm, more preferably of less than 200 μm, even more preferably of less than 50 μm and most preferably of less than 30 μm.

As used herein and as generally defined in the art, the weight particle diameter "$d_{98}$" value is defined as the size at which 98 % (the mean point) of the particle mass is accounted for by particles having a diameter equal to the specified value. The weight particle diameter was measured according to the sedimentation process. The sedimentation process is an analysis of sedimentation behaviour in a gravimetric field. The measurement is made with a Sedigraph™ 5100 of Micromeritics Instrument Corporation.

The mineral material particles prior to surface-treatment may have a specific surface area of from 1 to 800 $m^2/g$, more preferably from 20 to 500 $m^2/g$, even more preferably from 30 to 300 $m^2/g$ and most preferably from 30 to 150 $m^2/g$ measured using nitrogen and the BET process. For example, the mineral material particles of the surface-treated mineral material have a specific surface area of from 40 $m^2/g$ to 60 $m^2/g$ before surface treatment, e.g. a specific surface area of 57 $m^2/g$.

According to one embodiment of the present invention the mineral material particles of the at least one surface-treated mineral material prior to surface-treatment have a weight median particle diameter $d_{50}$ value of between 1.0 μm and 300 μm, preferably between 1 μm and 200 μm, more preferably between 2 μm and 50 μm, even more preferably between 3 μm and 30 μm, and most preferably between 4 μm and 25 μm or the mineral material of the at least one surface-treated mineral material prior to surface-treatment has a tapped bulk density measured according to the standard method ISO 787/11 of the dry powder from 0.07 g/mL to 0.60 g/mL, preferably from 0.08 g/mL to 0.40 g/mL, and most preferably from 0.10 g/mL to 0.20 g/mL or the mineral material particles of the at least one surface-treated mineral material prior to surface-treatment have a specific surface area of from 1 to 800 $m^2/g$, more preferably from 20 to 500 $m^2/g$, even more preferably from 30 to 300 $m^2/g$ and most preferably from 30 to 150 $m^2/g$.

According to one embodiment of the present invention the mineral material particles of the at least one surface-treated mineral material prior to surface-treatment have a weight median particle diameter $d_{50}$ value of between 1.0 μm and 300 μm, preferably between 1 μm and 200 μm, more preferably between 2 μm and 50 μm, even more preferably between 3 μm and 30 μm, and most preferably between 4 μm and 25 μm and the mineral material of the at least one surface-treated mineral material prior to surface-treatment has a tapped bulk density measured according to the standard method ISO 787/11 of the dry powder from 0.05 g/mL to 0.80 g/mL preferably from 0.07 g/mL to 0.60 g/mL, preferably from 0.08 g/mL to 0.40 g/mL, and most preferably from 0.10 g/mL to 0.20 g/mL and the mineral material particles of the at least one surface-treated mineral material prior to surface-treatment have a specific surface area of from 1 to 800 $m^2/g$, more preferably from 20 to 500 $m^2/g$, even more preferably from 30 to 300 $m^2/g$ and most preferably from 30 to 150 $m^2/g$.

In one preferred embodiment, the mineral material particles of the present surface-treated mineral material are hydromagnesite particles and have prior to surface-treatment a tapped bulk density measured according to the standard method ISO 787/11 of the dry powder from 0.05 g/mL to 0.80 g/mL, a weight median particle diameter $d_{50}$ value prior to surface-treatment of from 0.1 μm to 50 μm and have a specific surface area prior to surface-treatment within the range of 1 $m^2/g$ to 250 $m^2/g$.

In one preferred embodiment, the mineral material particles of the present surface-treated mineral material are zeolite particles and have prior to surface-treatment a tapped bulk density measured according to the standard method ISO 787/11 of the dry powder from 0.05 g/mL to 0.80 g/mL, a weight median particle diameter $d_{50}$ value prior to surface-treatment of from 0.1 μm to 50 μm and have a specific surface area prior to surface-treatment within the range of 1 $m^2/g$

to 250 $m^2/g$.

In accordance with the inventive process the mineral material is surface-treated by a material which provides a cationic charge to the mineral material.

According to one embodiment of the present invention the surface-treatment of the at least one surface-treated mineral material comprises at least one material which provides a cationic charge to the mineral material selected from the group consisting of mono-, di-, or trivalent cations, cationic polymers and mixtures thereof.

In this regard, the at least one cationic polymer being comprised in the coating of the surface-treated mineral material may be selected from any cationic polymer having a positive charge density in the range of 1 mEq/g and 15 mEq/g. Preferably, the at least one cationic polymer is selected such that it has a positive charge density in the range of 2.5 mEq/g and 12.5 mEq/g and most preferably in the range of 5 mEq/g and 10 mEq/g.

For example, the at least one cationic polymer has a positive charge density in the range of 6 mEq/g and 8 mEq/g and most preferably in the range from 6 mEq/g and 7 mEq/g. Alternatively, the at least one cationic polymer has a positive charge density in the range of 7 mEq/g and 8 mEq/g.

Additionally or alternatively, the at least one cationic polymer is selected such that at least 60 % of the monomer units carry a cationic charge. Preferably, h at least 70 % of the monomer units have a cationic charge, more preferably at least 80 % and even more preferably at least 90 %. In one preferred embodiment of the present invention, the at least one surface-treated mineral material comprises at least one cationic polymer in which almost up to 100 %, preferably 100 %, of the monomer units have a cationic charge.

In one preferred embodiment, the at least one surface-treated mineral material comprises at least one cationic polymer having a weight average molecular weight $M_w$ of below 1,000,000 g/mole, more preferably from 50,000 to 750,000 g/mole, even more preferably from 50,000 to 650,000 g/mole and most preferably from 100,000 to 300,000 g/mole.

In the process of the present invention, the surface-treated mineral material is covered by a surface-treatment comprising a homopolymer and/or a copolymer of the at least one cationic polymer.

In one preferred embodiment, the surface-treatment of the at least one surface-treated mineral material comprises a homopolymer of the at least one cationic polymer. That is to say, the cationic polymer consists substantially, i.e. of equal or below than 99.5 wt.-%, of the respective monomer units.

In one preferred embodiment, only monomer units selected from the group consisting of diallyldialkyl ammonium salts, tertiary amines, quaternized amines, quaternized imines, acrylamide, methacrylamide, N,N-dimethyl acrylamide, acrylic acid, methacrylic acid, vinylsulfonic acid, vinyl pyrrolidone, hydroxyl ethyl acrylate, styrene, methyl methacrylate and vinyl acetate are detectable in the homopolymer.

In one preferred embodiment of the present invention, the surface-treatment of the at least one surface-treated mineral material comprises a homopolymer based on diallyldialkyl ammonium salt monomers. In one preferred embodiment, the diallyldialkyl ammonium salt monomers are diallyldimethyl ammonium chloride.

In another preferred embodiment of the present invention, the surface-treatment of the at least one surface-treated mineral material comprises a homopolymer based on acrylic acid monomers.

In the meaning of the present invention a cationic polymer being a homopolymer based on monomer units of an acid, for example on acrylic acid, is a cationic homopolymer wherein the backbone of the homopolymer is formed from this monomeric acid molecule but the acid group is not present in the homopolymer in the form of -COOH or $-COO^-$ but is esterified, for example with an alcohol, e.g., ethanol.

In case the cationic polymer is a copolymer, it is appreciated that the copolymer comprises monomers copolymerizable with suitable comonomers. Preferably, the cationic polymer being a copolymer according to this invention comprises, preferably consists of, monomer units selected from diallyldialkyl ammonium salts and methacrylic acid and comonomer units selected from the group consisting of acrylamide, methacrylamide, N,N-dimethyl acrylamide, acrylic acid, methacrylic acid, vinylsulfonic acid, vinyl pyrrolidone, hydroxyl ethyl acrylate, styrene, methyl methacrylate, vinyl acetate and mixtures thereof.

For example, the surface-treatment of the surface-treated mineral material may comprise a cationic polymer as described as comb polymer in US 2009/0270543 A1.

In the meaning of the present invention a cationic polymer being a copolymer comprising monomer units of an acid, for example acrylic acid, is a cationic copolymer wherein some of the acid groups in the copolymer may not be present in the form of -COOH or $-COO^-$ but may be esterified, for example with an alcohol, e.g., ethanol. According to a preferred embodiment, a copolymer comprising monomer units of an acid, for example acrylic acid, is a cationic copolymer wherein all the acid groups in the copolymer are esterified, for example with an alcohol, e.g., ethanol.

In one preferred embodiment, the cationic polymer is a copolymer prepared from 92 wt.-% methoxy polyethylene glycol methacrylate of molecular weight 2,000 g/mole and 8 wt.-% acrylic acid and at least partially neutralised by soda. In a further preferred embodiment, the cationic polymer is a copolymer prepared from 92 wt.-% methoxy polyethylene glycol methacrylate of molecular weight 2,000 g/mole and 8 wt.-% acrylic acid and totally neutralised by soda.

If the monomer and/or comonomer units of the homopolymer or copolymer are diallyldialkyl ammonium salts, they are preferably selected from the group consisting of diallyldimethyl ammonium bromide, diallyldimethyl ammonium chloride, diallyldimethyl ammonium phosphate, diallyldiethyl ammonium sulfate, diallyldiethyl ammonium bromide, diallyldiethyl ammonium chloride, diallyldiethyl ammonium phosphate, diallyldiethyl ammonium sulphate, diallyldipropyl ammonium bromide, diallyldipropyl ammonium chloride, diallyldipropyl ammonium phosphate and diallyldipropyl ammonium sulphate. In one preferred embodiment, the diallyldialkyl ammonium salt monomers are diallyldimethyl ammonium chloride monomers.

In an especially preferred embodiment, the cationic polymer is a homopolymer based on diallyldimethyl ammonium chloride (polyDADMAC).

If the monomer and/or comonomer units of the homopolymer or copolymer are quaternized amines, they are preferably epichlorhydrin reaction products such as polyamine epichlorhydrin.

If the monomer and/or comonomer units of the homopolymer or copolymer are quaternized imines, they are preferably polyethyleneimine.

In one preferred embodiment, the cationic polymer of this invention being a copolymer comprising monomer units selected from diallyldialkyl ammonium salts and methacrylic acid, and acrylamide or acrylic acid as comonomer units.

For example, the surface-treatment of the at least one surface-treated mineral material comprises a copolymer of the at least one cationic polymer, wherein the monomer and comonomer units are derivable from diallyldialkyl ammonium salts and acrylamide only. In one preferred embodiment, the cationic polymer being a copolymer of this invention comprises monomer and comonomer units derivable from diallyldimethyl ammonium chloride and acrylamide only. Alternatively, the surface-treatment of the at least one surface-treated mineral material comprises a copolymer of the at least one cationic polymer, wherein the monomer and comonomer units are derivable from methacrylic acid and acrylic acid only.

Additionally or alternatively, the surface-treatment of the at least one surface-treated mineral material comprises a copolymer of the at least one cationic polymer, wherein the monomer and comonomer units are derivable from acrylic acid and acrylamide only.

Additionally, it is appreciated that the copolymer has preferably a comonomer content of more than 2.0 wt.-%, more preferably more than 5 wt.-%, yet more preferably more than 7.5 wt.-%. For example, the copolymer has preferably a comonomer content in the range between 2 wt.-% and 80 wt.-%, more preferably in the range between 5 wt.-% and 60 wt.-% and most preferably in the range between 7.5 wt.-% and 40 wt.-%. The weight percentage is based on the total weight of the copolymer.

In one preferred embodiment, the surface-treatment of the at least one surface-treated mineral material comprises a copolymer, wherein the molar ratio of monomer units and comonomer units is from 5:1 to 1:5, more preferably from 4:1 to 1:4, even more preferably from 3:1 to 1:3 and most preferably from 3:1 to 1:1.

In one preferred embodiment, the cationic polymer comprises a mixture of at least two cationic polymers. Preferably, if the cationic polymer comprises a mixture of at least two cationic polymers, one cationic polymer is a homopolymer based on diallyldimethyl ammonium chloride. Alternatively, if the cationic polymer comprises a mixture of at least two cationic polymers, one cationic polymer is a homopolymer based on acrylic acid.

In a further preferred embodiment, the cationic polymer comprises a mixture of two cationic polymers, wherein one cationic polymer is a homopolymer based on diallyldimethyl ammonium chloride and the other one is selected from the group consisting of a homopolymer based on acrylic acid, a copolymer based on diallyldimethyl ammonium chloride and acrylamide and a copolymer based on methacrylic acid and acrylic acid. Alternatively, if the cationic polymer comprises a mixture of two cationic polymers, wherein one cationic polymer is a homopolymer based on acrylic acid, the other one is selected from the group consisting of a homopolymer based on diallyldimethyl ammonium chloride, a copolymer based on diallyldimethyl ammonium chloride and acrylamide and a copolymer based on methacrylic acid and acrylic acid.

If the cationic polymer comprises a mixture of two cationic polymers, the molar ratio of the homopolymer based on diallyldimethyl ammonium chloride and the second cationic polymer is from 99:1 to 1:99, more preferably from 50:1 to 1:50, even more preferably from 25:1 to 1:25 and most preferably from 10:1 to 1:10. In one especially preferred embodiment of the present invention, the molar ratio of the homopolymer based on diallyldimethyl ammonium chloride and the second cationic polymer is from 90:1 to 1:1, more preferably from 90:1 to 10:1 and most preferably from 90:1 to 50:1.

In another preferred embodiment, the molar ratio of the homopolymer based on acrylic acid and the second cationic polymer is from 99:1 to 1:99, more preferably from 50:1 to 1:50, even more preferably from 25:1 to 1:25 and most preferably from 10:1 to 1:10. In one especially preferred embodiment of the present invention, the mole ratio of the homopolymer based on acrylic acid and the second cationic polymer is from 90:1 to 1:1, more preferably from 90:1 to 10:1 and most preferably from 90:1 to 50:1.

The at least one mono-, di-, or trivalent cations may be any cations that comprise one, two or three positive charges. The cations may be inorganic or organic but preferably are inorganic. According to a preferred embodiment of the present invention the mono-, di-, or trivalent cations are selected from $Fe^{3+}$, $Al^{3+}$, $Mn^{2+}$ $Zn^{2+}$ and mixtures thereof.

According to one embodiment of the present invention at least 0.1 % of the accessible surface area of the mineral material is surface-treated with the at least one material which provides a cationic charge to the mineral material, preferably between 0.2 % and 50 %, more preferably between 0.5 % and 30 %, even more preferably between 0.7 % and 20 % and most preferably between 1.0 % and 10 %.

According to one embodiment of the present invention at least 0.1 % of the accessible surface area of the mineral material is surface-treated with the at least one cationic polymer, preferably between 0.2 % and 50 %, more preferably between 0.5 % and 30 %, even more preferably between 0.7 % and 20 % and most preferably between 1.0 % and 10 %.

According to one embodiment of the present invention at least 0.1 % of the accessible surface area of the mineral material is surface-treated with the at least one mono-, di-, or trivalent cations, preferably between 0.2 % and 50 %, more preferably between 0.5 % and 30 %, even more preferably between 0.7 % and 20 % and most preferably between 1.0 % and 10 %.

According to one embodiment the surface-treatment merely consists of at least on cationic polymer, for example the surface-treatment merely consists of polyDADMAC. In the case the surface-treatment merely consists of at least one cationic polymer, at least 0.1 % of the accessible surface area of the mineral material is surface-treated with the polyDADMAC, preferably between 0.2 % and 50 %, more preferably between 0.5 % and 30 %, even more preferably between 0.7 % and 20 % and most preferably between 1.0 % and 10 %.

According to one embodiment the surface-treatment merely consists of mono-, di-, or trivalent cations, for example the surface-treatment merely consists of $Fe^{3+}$-ions. In the case the surface-treatment merely consists of mono-, di-, or trivalent cations, at least 0.1 % of the accessible surface area of the mineral material is surface-treated with the $Fe^{3+}$-ions, preferably between 0.2 % and 50 %, more preferably between 0.5 % and 30 %, even more preferably between 0.7 % and 20 % and most preferably between 1.0 % and 10 %.

According to one embodiment the surface-treatment merely consists of at least one cationic polymer and mono-, di-, or trivalent cations, for example the surface-treatment merely consists of polyDADMAC and $Fe^{3+}$-ions.

In one preferred embodiment, the at least one cationic polymer has a solubility in water of above 50 g/100 ml of water, preferably of above 75 g/100 ml of water, even more preferably of above 100 g/100 ml of water and most preferably of above 150 g/100 ml of water. In one especially preferred embodiment, the at least one cationic polymer is readily soluble in water.

In one preferred embodiment, the mono-, di-, or trivalent cations have a solubility in water of above 50 g/100 ml of water, preferably of above 75 g/100 ml of water, even more preferably of above 100 g/100 ml of water and most preferably of above 150 g/100 ml of water. In one especially preferred embodiment, the mono-, di-, or trivalent cations are readily soluble in water.

Preferably, the surface-treated mineral material used in the present process is prepared by mixing the mineral material, preferably in form of a slurry, and the material which provides a cationic charge to the mineral material, preferably in form of a suspension, before being brought into contact with the sludge and/or sediment to be treated. Mixing can be accomplished by any conventional means known to the skilled person.

The surface-treated mineral material is preferably in the form of a particulate material, and may have a particle size distribution as conventionally employed for the material(s) involved in the treatment of polluted water. The surface-treated mineral material may have a tapped bulk density measured according to the standard method ISO 787/11 of the dry powder from 0.05 g/mL to 0.80 g/mL, preferably from 0.07 g/mL to 0.60 g/mL, more preferably from 0.08 g/mL to 0.40 g/mL, and most preferably from 0.10 g/mL to 0.20 g/mL

The surface-treated mineral material particles may have a weight median particle diameter $d_{50}$ value of between 1.0 μm and 300 μm, preferably between 1 μm and 200 μm, more preferably between 2 μm and 50 μm, even more preferably between 3 μm and 30 μm, and most preferably between 4 μm and 25 μm.

The surface-treated mineral material particles may have a $d_{98}$ of less than 500 μm, preferably of less than 300 μm, more preferably of less than 200 μm, even more preferably of less than 50 μm and most preferably of less than 30 μm.

The surface-treated mineral material particles may have a specific surface area of from 1 to 800 $m^2/g$, more preferably from 20 to 500 $m^2/g$, even more preferably from 30 to 300 $m^2/g$ and most preferably from 30 to 150 $m^2/g$.

In one preferred embodiment, the surface-treated mineral material is hydromagnesite that has been surface-treated with polyDADMAC. The surface-treated mineral materials may have a tapped bulk density measured according to the standard method ISO 787/11 of the dry powder from 0.05 g/mL to 0.80 g/mL, a weight median particle diameter $d_{50}$ value of from 0.1 μm to 50 μm and may have a specific surface area within the range of 1 $m^2/g$ to 250 $m^2/g$. Preferably, the hydromagnesite particles that have been surface-treated with polyDADMAC have a tapped bulk density of the dry powder from 0.10 g/mL to 0.20 g/mL, a weight median particle diameter $d_{50}$ value of from 6 μm to 40 μm and a specific surface area within the range of 30 $m^2/g$ to 100 $m^2/g$. For example, the hydromagnesite particles that have been surface-treated with polyDADMAC have a tapped bulk density of the dry powder of 0.15 g/mL, a weight median particle diameter $d_{50}$ value of 8.4 μm and a specific surface area prior to coating of 57 $m^2/g$.

According to another preferred embodiment, the surface-treated mineral material is zeolite, preferably clinoptilolite that has been surface treated with polyDADMAC. The surface-treated mineral materials may have a tapped bulk density measured according to the standard method ISO 787/11 of the dry powder from 0.05 g/mL to 0.80 g/mL$^3$, a weight median particle diameter $d_{50}$ value of from 0.1 μm to 50 μm and may have a specific surface area within the range of 1 $m^2$/g to 250 $m^2$/g. Preferably, the zeolite particles that have been surface-treated with polyDADMAC have a tapped bulk density of the dry powder from 0.07 g/mL to 0.60 g/mL, a weight median particle diameter $d_{50}$ value of from 6 μm to 40 μm and a specific surface area within the range of 30 $m^2$/g to 300 $m^2$/g. For example, the zeolite particles that have been surface-treated with polyDADMAC have a tapped bulk density of the dry powder of 0.41 g/mL, a weight median particle diameter $d_{50}$ value of 12 μm and a specific surface area prior to coating of 30 $m^2$/g to 300 $m^2$/g.

According to another preferred embodiment, the surface-treated mineral material is zeolite, preferably clinoptilolite that has been surface treated with iron(III)chloride. The surface-treated mineral materials may have a tapped bulk density measured according to the standard method ISO 787/11 of the dry powder from 0.05 g/mL to 0.80 g/mL, a weight median particle diameter $d_{50}$ value of from 0.1 μm to 50 μm and may have a specific surface area within the range of 1 $m^2$/g to 250 $m^2$/g. Preferably, the zeolite particles that have been surface-treated with iron(III)cloride have a tapped bulk density of the dry powder from 0.07 g/mL to 0.60 g/mL, a weight median particle diameter $d_{50}$ value of from 6 μm to 40 μm and a specific surface area within the range of 30 $m^2$/g to 300 $m^2$/g. For example, the zeolite particles that have been surface-treated with iron(III)chloride have a tapped bulk density of the dry powder of 0.41 g/mL, a weight median particle diameter $d_{50}$ value of 12 μm and a specific surface area prior to coating of 30 $m^2$/g to 300 $m^2$/g.

The surface-treated mineral material to be used in the inventive process can be present in any appropriate form, e.g. in the form of granules and/or a powder or in the form of a cake. For example, the surface-treated mineral material to be used in the inventive process is in powder form and/or in the form of granules. According to a preferred embodiment, the surface-treated mineral material to be used in the inventive process can be present as an aqueous suspension, e.g. in the form of a slurry or a paste which can be metered with a conveying screw. After surface-treatment the slurry may be used directly without further purification.

According to one embodiment of the present invention a dispersing agent is added to the surface-treated mineral material. The dispersing agent may be any dispersing agent known to the skilled person. For example, the dispersing agent may be an anionically charged "comb polymer". The term "anionically-charged comb-polymer" refers to a comb-shaped polymer which is formed from a main chain, also referred to as back bone, to which carbonic acid groups and/or other acid groups are attached in the form of free acids or salts thereof, i.e. in a form of a carboxylate ion, as well as side chains comprising polyalkylene oxide, optionally end-caped with a hydrocarbon chain. The polyalkylene oxide side chains can be bonded to the main chain via ester bonds, amide bonds, or ether bonds. In addition to the carbonic acid groups and the polyalkylene oxide side chains, further functional or non-functional groups can be bonded to the main chain, e.g. positively charged functional groups such as a quaternary ammonium group. Possible dispersing agents are disclosed in US 2009/0199741 A1, US 6,387,176 B1, EP 1136508 A1, EP 1138697 A1, EP 1189955 A1, EP 0736553 A1 and EP 2 641 941 A1. Examples of anionically charged comb polymers that may be used in the present invention are polymers of the MELFLUX® or MelPers® series, e.g. MelPers® 2450 available from BASF (Trostberg, Germany), ETHACRYL® M dispersant, available from Coatex, LLC (Chester, SC), or MIGHTY EG® dispersant, available from Kao Specialties Americas, LLC, (High Point, NC). In an exemplified embodiment of the present invention ETHACRYL® M dispersant, available from Coatex is added as dispersing agent. The dispersing agent may be added to the mineral material or to the surface-treated mineral material in an amount of 0.01 wt.-% to 10 wt.-%, based on the dry weight of the mineral material or the surface-treated mineral material, preferably in an amount of 0.1 wt.-% to 5 wt.-%, and most preferably in an amount of 1 wt.-% to 3 wt.-%, based on the dry weight of the mineral material or the surface-treated mineral material. For example, the dispersing agent is added to the mineral material in an amount of 1.8 wt.-%, based on the dry weight of the mineral material.

A "slurry" or "suspension" in the meaning of the present invention comprises undissolved solids, i.e. surface-treated mineral material and water and optionally further additives. For example, the suspension may contain the surface-treated mineral material, water and an additional dispersing agent, e.g. a polyacrylate. In another preferred embodiment of the present invention, the suspension is free of additional dispersing agents, e.g. polyacrylate. Suspensions usually contain large amounts of solids and are more viscous and generally of higher density than the liquid from which they are formed. It is accepted in the art that the general term "dispersion" inter alia covers "suspensions" or "slurries" as a specific type of dispersion.

In one preferred embodiment, the surface-treated mineral material to be used in the inventive process is suspended in water such that the slurry has a content of surface-treated mineral material within the range of 1 wt.-% to 80 wt.-%, more preferably 3 wt.-% to 60 wt.-%, even more preferably 5 wt.-% to 40 wt.-%, and most preferably 8 wt.-% to 20 wt.-%, based on the total weight of the slurry. For example, the surface-treated mineral material to be used in the inventive process is suspended in water such that the slurry has a content of surface-treated mineral material of 10 wt.-%.

Step c) contacting the sludge and/or sediment with the at least one surface-treated mineral material

According to step c) of the process of the present invention, the sludge and/or sediment to be dewatered provided in step a) is contacted with the at least one surface-treated mineral material of step b) for obtaining a composite material of surface-treated mineral material and impurities.

In general, the sludge and/or sediment to be dewatered and the surface-treated mineral material can be brought into contact by any conventional means known to the skilled person.

For example, the step of contacting the sludge and/or sediment to be dewatered with the at least one surface-treated mineral material, wherein the mineral material material prior to surface-treatment has a tapped bulk density measured according to the standard method ISO 787/11 of the dry powder from 0.05 g/mL to 0.80 g/mL and wherein the mineral material is surface-treated by a material which provides a cationic charge to the mineral material, preferably takes place in that the surface of the sludge and/or sediment is at least partially covered with the at least one surface-treated mineral material. Additionally or alternatively, the step of contacting the sludge and/or sediment to be dewatered with the at least one surface-treated mineral material preferably takes place in that the polluted sludge and/or sediment of step a) is mixed with the surface-treated mineral material of step b). The skilled man will adapt the mixing conditions (such as the configuration of mixing speed) according to his needs and available equipment.

Preferably, the surface-treated mineral material is suspended in the sludge and/or sediment to be treated, e.g. by agitation means.

The treatment time for carrying out the contacting of the sludge and/or sediment to be dewatered with the at least one surface-treated mineral material is carried out for a period in the range of several seconds to several minutes, e.g. 20 s or more, preferably 30 s or more, more preferably 60 s or more and most preferably for a period of 120 s or more. In general, the length of contacting the sludge and/or sediment to be treated with the at least one surface-treated mineral material is determined by the degree of sludge and/or sediment pollution and the specific sludge and/or sediment to be treated.

It is to be understood that the amount of surface-treated mineral material according to the present process is selected such that it is sufficient in the sludge and/or sediment to be treated, i.e. high enough for providing efficient binding activity for at least one type of inorganic impurities present in the polluted sludge and/or sediment but at the same time is so low that no significant amount of unbound surface-treated mineral material would be observed in the water and/or sludge and/or sediment to treated.

The amount of surface-treated mineral material depends on the type of sludge and/or sediment to be treated as well as on the type and amount of impurities. Preferably, an amount of 10 ppm to 1 wt.-%, more preferably 100 ppm to 0.2 wt.-% and most preferably 100 ppm to 1000 ppm surface-treated mineral material, based on the total weight of the water and/or sludge and/or sediment to be treated, is added.

The surface-treated mineral material can be added as an aqueous suspension, e.g. the suspension described above. Alternatively, it can be added to the sludge and/or sediment to be dewatered in any appropriate solid form, e.g. in the form of granules or a powder or in form of a cake.

Step d) removing water from the sludge and/or sediment comprising the composite material of step c)

According to step d) of the present invention the water is removed from the sludge and/or sediment comprising the composite material of step c).

According to one embodiment of the present invention step d) is performed by filtration, sedimentation and/or centrifugation and preferably by filtration.

After the contacting/flocculation has been completed, the flocculated composite material of the at least one surface-treated mineral material and impurities can be removed by conventional separation means known to the skilled person such as filtration, sedimentation and/or centrifugation and preferably by filtration.

For example, the filtration may be performed with a filterpaper, for example a Whatman filter paper 589/1 (90 mm) having a pore size of 12 to 25 μm. The filtration may performed under SATP conditions which means at a temperature of 25°C and an absolute pressure of exactly 100 kPa. Alternatively, the filtration may be performed under vacuum, for example, provided with a diaphragm pump or with a water-jet vacuum pump. A possible diaphragm pump is available from Vacuubrand Type MZ 2C with a suction capacity of 2.4 $m^3$/hour.

Alternatively, the filtration may be performed with a big bag. A big bag is an industrial container made of flexible fabric for example of thick woven polyethylene or polypropylene. A possible big bag is, for example the Geotextile bag, commercially available from Huesker, having a mesh size of 200 μm (SoilTain®, Typ PP 105/105 DW. The bag can be in the form a house 1m diameter and maybe ten meter length, which will require an industrial pump to efficiently pump the sludge into this bag.

According to one embodiment the filtration may be performed in a batch or continuous mode. For example, the suspension may be filtered one time or further times, for example, two times, three times or four times. The suspension may be filtered each time with as new filter or each time with the same filter comprising the already filtered composite material. Alternatively, the suspension may be filtered in a continuous mode for a period of time from 1 to 30 000 s. For example, in a period of time from 1 to 5000 s, preferably from 60 to 2500 s and most preferably from 600 to 1000 s.

The inventors surprisingly found that the process according to the present invention may be effectively for increasing the solids content of aqueous sludges and/or sediments. The inventors surprisingly found that the blocking or clogging of the filter and/or the big bag during filtration of such a suspension is reduced or prevented and thus, the water content in the obtained filter cakes is comparatively low resulting in a dramatically decreased energy consumption on combustion and, therefore, in reduced energy costs.

Applications are possible for the dewatering of sludges and/or sediments originated in different industries such as industrial waste water, drinking water, urban waste water, sludge such as harbour sludge, river sludge, coastal sludge or digested sludge, waste water or process water from breweries or other beverage industries, waste water or process water in the paper industry, colour-, paints-, or coatings industry, agricultural waste water, slaughterhouse waste water, leather industry waste water and leather tanning industry.

In view of the very good results of the inventive process in increasing the solids content of aqueous sludges and/or sediments as defined above, a further aspect of the present invention is the use of a surface-treated mineral material for increasing the solids content of sludges and/or sediments, wherein the mineral material prior to surface-treatment has a tapped bulk density measured according to the standard method ISO 787/11 of the dry powder from 0.05 g/mL to 0.80 g/mL and wherein the mineral material is surface-treated with a material which provides a cationic charge to the mineral material.

According to another aspect of the present invention a composite material comprising a surface-treated mineral material and impurities obtainable by the process according to the present invention is disclosed.

According to one embodiment of the present invention the composite material has a water content of less than 90 wt.-% based on the total weight of the composite material after filtration from the sludges and/or sediments and before drying, preferably below 80 wt.-%, more preferably below 60 wt.-%, even more preferably below 50 wt.-% and most preferably below 30 wt.-%,. The filtration in the present case is performed with a Whatman filter paper 589/1 (90 mm) having a pore size of 12 to 25 μm. The filtration is performed under vacuum, provided with a diaphragm pump from Vacuubrand Type MZ 2C with a suction capacity of 2.4 $m^3$/hour.

Optional process steps:

In one embodiment of the present invention, the process further comprises step e) of contacting the sludge and/or sediment to be dewatered of step a) with at least one polymeric flocculation aid.

Any polymeric flocculation aid known in the art can be used in the process of the present invention. Examples of preferred polymeric flocculation aids include polyacrylamides or polyelectrolytes based on polyacrylates, poly(diallyldimethylammonium chloride), polyethyleneimines, polyamines or mixtures of these, and natural polymers such as starch, or natural modified polymers like modified carbohydrates.

In a preferred embodiment, the polymeric flocculation aid is no polyacrylamide.

Preferably, the polymeric flocculation aid has a weight average molecular weight of at least 100,000 g/mole. In a preferred embodiment, the polymeric flocculation aid has a weight average molecular weight $M_w$ in the range from 100,000 to 10,000,000 g/mole, preferably in the range from 300,000 to 5,000,000 g/mole, more preferably in the range from 300,000 to 1,000,000 g/mole and most preferably in the range from 300,000 to 800,000 g/mole.

The polymeric flocculation aid can be ionic or non-ionic. Preferably, the polymeric flocculation aid is ionic, i.e. an anionic polymeric flocculation aid or a cationic polymeric flocculation aid.

In the context of the present invention, the term "cationic" refers to any polymer having a positive overall charge. Thus, the presence of some anionic monomer units is not excluded as long as there are still sufficient cationic monomer units providing a positive overall charge and enabling its use as a flocculation aid. Furthermore, the term "cationic polymeric flocculation aid" also comprises those polymers having monomer units with functional groups which become cationic upon addition to the water to be treated, e.g. amine groups becoming ammonium groups in acidic water.

The term "anionic" refers to any polymer having a negative overall charge. Thus, the presence of some cationic monomer units is not excluded as long as there are still sufficient anionic monomer units providing a negative overall charge and enabling its use as a flocculation aid. Furthermore, the term "anionic polymeric flocculation aid" also comprises those polymers having monomer units with functional groups which become anionic upon addition to the water to be treated, e.g. acid groups such as sulfonic acid groups.

A preferred polymeric flocculation aid of the present invention is polyacrylamide. By appropriate modifications which are known to the skilled person, the polyacrylamide can be used as a cationic polymeric flocculation aid as well as an anionic polymeric flocculation aid.

Preferably, the polyacrylamide contains at least 50 mol-%, more preferably at least 60 mol-%, even more preferably at least 75 mol-% monomer units derived from acrylamide.

An anionic polyacrylamide, i.e. a polyacrylamide having a negative overall charge, can be obtained by introducing appropriate comonomer units, e.g. derived from (meth)acrylic acid.

A cationic polyacrylamide, i.e. a polyacrylamide having a positive overall charge, can be obtained by introducing appropriate comonomer units, e.g. derived from aminoalkyl(meth)acrylates such as dimethylaminomethyl(meth)acrylate, dimethylaminoethyl(meth)acrylate, dimethylaminopro-pyl(meth)acrylate, diethylaminomethyl(meth)acrylate, diethylaminoethyl(meth)acrylate or diethylaminopropyl(meth)acrylate which can be quaternized by alkyl halides.

In another preferred embodiment, polyacrylate is used as a preferred polymeric flocculation aid in the process of the present invention. Preferably, the polyacrylate is used as a cationic polymeric flocculation aid. More specifically, the polyacrylate used as a cationic polymeric flocculation aid is free of acrylamide. In an exemplified embodiment the polymeric flocculation aid consists of the commercially available flocculation aid Nerolan AG 580 (commercially available from Nerolan Wassertechnik GmbH, Germany). Nerolan AG 580 represents a polyacrylate which is free of acrylamide.

Preferably, the polyacrylate contains at least 50 mol-%, more preferably at least 60 mol-%, even more preferably at least 75 mol-% monomer units derived from aminoalkyl(meth)acrylates such as dimethylaminomethyl(meth)acrylate, dimethylaminoethyl(meth)acrylate, dimethylaminopro-pyl(meth)acrylate, diethylaminomethyl(meth)acrylate, diethylaminoethyl(meth)acrylate or diethylaminopropyl(meth)acrylate which can be quaternized by alkyl halides.

Alternatively, the polymeric flocculation aid may be a polymer as described as comb polymer in US 2009/0270543 A1.

In one preferred embodiment, the polymeric flocculation aid is a copolymer prepared from 92 wt.-% methoxy polyethylene glycol methacrylate of molecular weight 2,000 g/mole and 8 wt.-% acrylic acid and at least partially neutralised by soda. In a further preferred embodiment, the polymeric flocculation aid is a copolymer prepared from 92 wt.-% methoxy polyethylene glycol methacrylate of molecular weight 2,000 g/mole and 8 wt.-% acrylic acid and totally neutralised by soda.

According to one embodiment of the present invention contacting step c) may be carried out by adding the at least one surface-treated mineral material of step b) and the at least one polymeric flocculation aid of step e) to the sludge and/or sediment of step a) in a weight ratio of the at least one surface-treated mineral material: the at least one polymeric flocculation aid from 95:5 to 5:95, more preferably from 80:20 to 20:80 and even more preferably from 60:40 to 40:60.

The step of contacting the sludge and/or sediment to be dewatered with the at least one surface-treated mineral material and the polymeric flocculation aid preferably takes place in that the surface of the sludge and/or sediment is at least partially covered, either simultaneously or separately, with the at least one surface-treated mineral material and the polymeric flocculation aid. Additionally or alternatively, the step of contacting the sludge and/or sediment to be dewatered with the at least one surface-treated mineral material and the polymeric flocculation aid preferably takes place in that the sludge and/or sediment is, either simultaneously or separately, mixed with the surface-treated mineral material and the polymeric flocculation aid. The skilled man will adapt the mixing conditions (such as the configuration of mixing speed) according to his needs and available equipment.

Preferably, the surface-treated mineral material and/or the polymeric flocculation aid is suspended in the sludge and/or sediment to be treated, e.g. by agitation means.

The treatment time for carrying out the contacting of the sludge and/or sediment to be dewatered with the at least one surface-treated mineral material and the polymeric flocculation aid is carried out for a period in the range of several seconds to several minutes, e.g. 30 s or more, preferably 60 s or more, more preferably 90 s or more and most preferably for a period of 180 s or more. In general, the length of contacting the water and/or sludge and/or sediment to be treated with the at least one surface-treated mineral material and the polymeric flocculation aid is determined by the degree of water pollution and the specific water and/or sludge and/or sediment to be treated.

In a preferred embodiment of the present invention, process step d) is repeated one or more times.

It is to be understood that the amount of surface-treated mineral material according to the present process is selected such that it is sufficient in sludge and/or sediment to be treated, i.e. high enough for providing efficient binding activity for at least one type of inorganic impurities present in the polluted sludge and/or sediment but at the same time is so low that no significant amount of unbound surface-treated mineral material would be observed in the sludge and/or sediment to treated.

The amount of surface-treated mineral material and polymeric flocculation aid depends on the type of sludge and/or sediment to be treated as well as on the type and amount of impurities. Preferably, an amount of 10 ppm to 1 wt.-%, more preferably 100 ppm to 0.2 wt.-% and most preferably 100 ppm to 500 ppm surface-treated mineral material, based on the total weight of the water and/or sludge and/or sediment to be treated, is added. Preferably, an amount of 1 ppm to 1 wt.-%, more preferably 5 ppm to 1000 ppm polymeric flocculation aid, based on the total weight of the water and/or sludge and/or sediment to be treated, is added.

The polymeric flocculation aid can be added as an aqueous suspension or solution. Alternatively, it can be added to the water to be purified and/or sludge and/or sediment to be dewatered in any appropriate solid form, e.g. in the form of a powder.

If a polymeric flocculation aid is used a composite material comprising a surface-treated mineral material, polymeric flocculation aid and impurities obtainable by the process according to the present invention is disclosed.

In one embodiment of the present invention, the process further comprises the step of adding an anionic polymer before step d), preferably after step c).

The term "anionic polymer" in the meaning of the present invention refers to any polymer providing a negative overall charge. Thus, the presence of cationic monomer units is not excluded as long as there are still sufficient anionic monomer units providing a negative overall charge. The same applies for amphoteric polymers which provide an overall negative charge when bound to or coated onto the calcium carbonate-comprising mineral material.

In this regard, the at least one anionic polymer may be selected from any anionic polymer having a negative overall charge density in the range of 1 μEq/g (negative charge) to 15000 μEq/g (negative charge). Preferably, the at least one anionic polymer is selected such that it has a negative overall charge density in the range of 1000 μEq/g (negative charge) to 10000 μEq/g (negative charge) and most preferably in the range of 2000 μEq/g (negative charge) to 8000 μEq/g (negative charge).

In one embodiment of the present invention, the at least one anionic polymer has a weight average molecular weight Mw of at least 50000 g/mole, preferably from 50000 g/mole to below 1000000 g/mole, more preferably from 70000 to 750000 g/mole, even more preferably from 90000 to 650000 g/mole and most preferably from 100000 to 300000 g/mole.

According to one embodiment of the present invention, the anionic polymer is a homopolymer and/or a copolymer.

Anionic polymer that can be used are described in EP 0 441 037 or in the unpublished application EP 15 159 304.

Optionally, further additives can be added to the water and/or sludge and/or sediment to be treated. These might include agents for pH adjustment and conventional flocculants such as polyaluminium chloride, iron chloride or aluminium sulphate. However, in a preferred embodiment, the water purification process and/or dewatering process of sludge and/or sediment of the present invention does not use any additional conventional inorganic flocculation aids such as polyaluminium chloride, iron chloride or aluminium sulphate.

With regard to the definition of the surface-treated mineral material, polymeric flocculation aid and preferred embodiments thereof, reference is made to the statements provided above when discussing the technical details of the process of the present invention.

The following examples may additionally illustrate the invention, but are not meant to restrict the invention to the exemplified embodiments.

## Examples

The scope and interest of the invention may be better understood on the basis of the following examples which are intended to illustrate embodiments of the present invention. However, they are not to be construed to limit the scope of the claims in any manner whatsoever.

### Measurement processes

The following measurement processes were used to evaluate the parameters given in the examples and claims.

### Tapped Bulk density of the mineral material according to ISO 787/11

100 g ±0.5g of dried mineral material powder is shaken or sieved though a power funnel into a 250 mL glass measuring cylinder (graduation marks at 2mL). The cylinder is gently tapped until the surface of the sample is roughly levelled. Then the cylinder is placed in a holder of a tapping volumeter (jolting volumeter STAV II, Engelsmann) and tapped in steps of 1250 times until the differences between the last two readings is less than 2 mL. The final value is read off the nearest 1mL.

Tapped density [g/mL] is evaluated as : weighted sample[g] / tapped volume [mL]

### Particle size distribution (mass % particles with a diameter < *X*) and weight median diameter ($d_{50}$) of a particulate material

Weight median grain diameter and grain diameter mass distribution of a particulate material were determined via the sedimentation process, i.e. an analysis of sedimentation behavior in a gravitational field. The measurement was made with a Sedigraph™ 5100.

The process and instrument are known to the skilled person and are commonly used to determine grain size of fillers and pigments. The measurements were carried out in an aqueous solution of 0.1 wt.-% $Na_4P_2O_7$. The samples

were dispersed using a high speed stirrer and ultrasound.

**BET specific surface area of a material**

The BET specific surface area was measured via the BET process according to ISO 9277 using nitrogen, following conditioning of the sample by heating at 250°C for a period of 30 minutes. Prior to such measurements, the sample was filtered, rinsed and dried at 110°C in an oven for at least 12 hours.

**pH measurement**

The pH of the water samples is measured by using a standard pH-meter at approximately 25°C.

**Charge Density**

The charge density of a polymer and of a surface-treated mineral material was measured with a particle charge detector (PCD). The used particle charge detector was either a PCD-03 or a PCD-05, both available from Mütek with a measuring cell type 1 (10 to 30 ml).

The measurement of the charge density of a sample was carried out by weighting the sample in the cell as well as 10.0 g of demineralized water. The electrodes inside the cell have to be covered with liquid.

The piston was slowly inserted in the measuring cell and the measurement was started.

The samples were titrated with a 2.5 mmol/l polyvinylsulfate potassium solution. The solution was prepared by weighting 0.234 g polyvinylsulfate potassium salt in a volumetric flask (500 ml) and dissolving it with approximately 250 ml deionized water. 500 µl formaldehyde solution 37% and 100 µl benzylalcohol 99% were added and the solution was filled up to 500 ml with deionized water.

The titration solution factor (f) for the 2.5 mmol/l polyvinylsulfate potassium solution was determined by titrating 10.0 g demineralized water with 1000 ml polyDADMAC 2.5 mmol/l solution. The factor f was calculated by the following equitation:

$$\text{factor } (f) = \text{volume theoretical (ml)} / \text{volume used (ml)}$$

The charge density of the titrated sample was calculated by the following equation:

$$\text{charge density} = \text{titrant consumption (ml)} * 2.5\ (\mu\text{mol/ml}) * \text{factor } f / \text{sample weight of the dry sample (g)}$$

**Weight solids (% by weight) or solids content of a material in suspension**

The weight of solids is determined by dividing the weight of the solid material by the total weight of the aqueous suspension. The "solids content" of a suspension given in wt.-% in the meaning of the present invention can be determined using a Moisture Analyzer HR73 from Mettler-Toledo (T = 120°C, automatic switch off 3, standard drying) with a sample size of 5 to 20 g.

**Turbidity**

For each sample the turbidity was measured after a settling period of 20 min. The turbidity was measured with a Hach Lange 2100AN IS Laboratory Turbidimeter and the calibration was performed using StabCal turbidity standards (formazin standards) of < 0.1, 20, 200, 1000, 4000 and 7500 NTU.

<u>Preparation of the surface-treated mineral material</u>

A mineral material is coated with a cationic coating material. The used mineral materials are listed below:

| Sample name | Mineral material | bulk density of the dry powder | weight median particle diameter $d_{50}$ |
|---|---|---|---|
| A | Ground calcium carbonate GCC | 1.3 g/cm$^3$ | 5.0 μm |
| B | Hydromagnesite (PHM) | 0.15 g/cm$^3$ | 8.4 μm |
| C | Zeolite (clinoptilolite) | 0.41 g/cm$^3$ | 12 μm |
| D | Surface modified calcium carbonate MCC | 0.15 g/cm$^3$ | 4.7 μm |

The used cationic coating material are

- Catiofast BP Liquid commercially available from BASF, a cationic homopolymer based on diallyldimethyl ammonium chloride (polyDADMAC)
- Iron(III)chloride commercially available from Sigma-Aldrich, CAS Number 7705-08-0

The used dispersing agent is ETHACRYL® M dispersant available from Coatex.

A slurry of the mineral material having a solids content of 10 wt.-% is provided. The mineral material is optionally dispersed with 1.8 wt.-% dispersing agent and coated with the cationic coating material as follows:

- The mineral material is coated with 1.8 wt.-% of the cationic polymer, based on the total weight of the mineral material.
- The mineral material is coated with iron (III) chloride, whereby the iron mass is 10 wt.-%, based on the dry weight of the zeolite.

The obtained slurry is vigorously agitated to obtain a homogenous slurry and to avoid settling.

The following surface-treated mineral materials are obtained:

| Sample number | Mineral material | Dispersing agent | Cationic coating material |
|---|---|---|---|
| Example 1 | A | yes | Catiofast BP Liquid |
| Example 2 | B | yes | Catiofast BP Liquid |
| Example 3 | C | yes | Iron(III) chloride |
| Example 4 | C | yes | Iron(III) chloride and Catiofast BP Liquid |
| Example 5 | D | yes | Catiofast BP Liquid |

Dewatering tests

The sediment sample that is treated is obtained from RWE Power AG by Garzweiler (Germany). The location of sampling takes place at the "Sandfang LD10" pond. The provided sample is dark brown, nearly black, of very fine and oily consistency and has a total solids content of 13.8 wt.-%, based on the total weight of the provided sample. The provided sediment sample is an organic sediment sample.

The sediment sample is homogenized by mixing and sieving the sample on a 500 μm mesh and afterwards diluted with water to a total solids content of 5 wt.-%, based on the total weight of the sample.

The surface-treated mineral material samples of Example A are added to the diluted sediment sample. 20 kg of the surface-treated mineral material are added per ton sludge (dry/dry) which represents 1000 ppm of the surface-treated mineral material, based on the total weight of the diluted sediment. The mixture is mixed for 2 minutes.

Afterwards the treated sediment sample is filtered on a Büchner funnel 90 mm with a Whatman filter paper 589/1 (90 mm) having a pore size of 12 to 25 μm. The filtration is performed under standard ambient conditions with a diaphragm pump from Vacuubrand Type MZ 2C with a suction capacity of 2.4 m$^3$/hour for 10 min.

The filter cake is removed and dried in an oven at 70°C under normal pressure (100 kPa) for 10 hrs. The mass of the filter cake is measured before and after drying with an analytical balance of Mettler Toledo. The solids content of the samples is calculated based on the mass before and after drying. The values are listed in the table below. Furthermore, the turbidity of the filtrate is measured.

| Sample number | Mineral material | Solids content of the filter cake | Turbidity of the filtrate |
|---|---|---|---|
| Example 6 | Example 1 | 8.6 wt.-% | 100 NTU |
| Example 7 | Example 2 | 40.4 wt.-% | 29 NTU |
| Example 8 | Example 3 | 39.2 wt.-% | 11 NTU |
| Example 9 | Example 4 | 41.0 wt.-% | 21 NTU |
| Example 10 | Example 5 | 42.4 % | 78 NTU |

This data shows that sediment treatment, especially the increasing of the solids content of an aqueous sediment is possible with the process of the present invention. As can be seen from examples 7 to 10 it is possible by a process according to the present invention, wherein at least one surface-treated mineral material is used, wherein the mineral material prior to coating has a bulk density of the dry powder between 0.05 g/mL and 0.80 g/mL and the mineral material particles prior to coating have a weight median particle diameter $d_{50}$ value of from 0.1 $\mu$m to 50 $\mu$m and wherein the mineral material is covered by a material which provides a cationic charge it is possible to increase the solids content of the aqueous sediment by filtration. Furthermore, it can be seen that the solids content of the samples of the inventive process (Examples 7 to 10) is much higher than the solids content of the comparative process (Example 6), wherein the used surface-treated mineral material is GCC having a tapped bulk density of 1.3 g/mL and a weight median particle diameter of 5.0 $\mu$m. In Example 6 the filter is blocked and, therefore, most of the water does not flow through the filter but stays in the filter cake and above in the funnel. Thus the solids content of the filter cake is relatively low. Contrary to that the filter cake in Examples 7 to 10 is not blocked and, therefore, a huge amount of water flows through the filter. Therefore, the solids content of the filter cake is relatively high.

In addition, the turbidity values of the filtrate are much lower in Examples 7 to 10 (11 to 78 NTU) in comparison to Example 6 (100 NTU). Therefore, the filtration quality and efficiency of the inventive process is increased in comparison to a comparative process.

## Claims

**1.** A process for increasing the solids content of aqueous sludges and/or sediments, comprising the following steps of:

a) providing aqueous sludge and/or sediment to be dewatered comprising impurities;
b) providing at least one surface-treated mineral material, wherein the mineral material prior to surface-treatment has a tapped bulk density measured according to the standard method ISO 787/11 of the dry powder from 0.05 g/mL to 0.80 g/mL and wherein the mineral material is surface-treated by a material which provides a cationic charge to the mineral material,
c) contacting sludge and/or sediment of step a) with the at least one surface-treated mineral material of step b) for obtaining a composite material of surface-treated mineral material and impurities and
d) removing water from the sludge and/or sediment comprising the composite material of step c).

**2.** The process according to claim 1, wherein the sludge and/or sediment of step a) is selected from sludge such as harbour sludge, river sludge, coastal sludge or digested sludge, mining sludge, municipal sludge, civil engineering sludge, drilling mud, sludge from oil drilling, waste water or process water from breweries or other beverage industries, waste water or process water in the paper industry, colour-, paints-, or coatings industry, agricultural waste water, slaughterhouse waste water, leather industry waste water and leather tanning industry.

**3.** The process according to claims 1 or 2, wherein the at least one surface-treated mineral material of step b) comprises magnesium and/or calcium carbonate comprising mineral materials and/or aluminium or aluminosilicate comprising mineral materials and/or phyllosilicates and is preferably selected from the group consisting of pumice, scorea, tuff, MCC, kaolin, bentonite, alumina, bauxite, gypsum, magnesium carbonate, perlite, dolomite, diatomite, huntite, magnesite, boehmite, palygorskite, mica, vermiculite, hydrotalcite, hectorite, halloysite, gibbsite, kaolinite, montmorillonite, illite, attapulgite, laponite, sepiolite, hydromagnesite, zeolite and mixtures thereof, more preferably is selected from the group consisting of MCC, huntite, perlite, hydromagnesite, zeolite, bentonite and mixtures thereof and most preferably is selected from the group consisting of hydromagnesite, zeolite and mixtures thereof.

**4.** The process according to any one of claims 1 to 3, wherein

a) the mineral material particles of the at least one surface-treated mineral material prior to surface-treatment have a weight median particle diameter $d_{50}$ value of between 1.0 μm and 300 μm, preferably between 1 μm and 200 μm, more preferably between 2 μm and 50 μm, even more preferably between 3 μm and 30 μm, and most preferably between 4 μm and 25 μm and/or
b) the mineral material of the at least one surface-treated mineral material prior to surface-treatment has a tapped bulk density measured according to the standard method ISO 787/11 of the dry powder from 0.07 g/mL to 0.60 g/mL, preferably from 0.08 g/mL to 0.40 g/mL, and most preferably from 0.10 g/mL to 0.20 g/mL and/or
c) the mineral material particles of the at least one surface-treated mineral material prior to surface-treatment have a specific surface area of from 1 to 800 $m^2/g$, more preferably from 20 to 500 $m^2/g$, even more preferably from 30 to 300 $m^2/g$ and most preferably from 30 to 150 $m^2/g$.

**5.** The process according to any one of claims 1 to 4, wherein the surface-treatment of the at least one surface-treated mineral material comprises at least one material which provides a cationic charge to the mineral material selected from the group consisting of mono-, di-, or trivalent cations, cationic polymers and mixtures thereof.

**6.** The process according to claim 5, wherein the cationic polymers comprise polymers

a) having a positive charge density in the range of 1 mEq/g and 15 mEq/g, more preferably in the range of 2.5 mEq/g and 12.5 mEq/g and most preferably in the range of 5 mEq/g and 10 mEq/g and/or
b) in which at least 60 % of the monomer units have a cationic charge, preferably at least 70 %, more preferably at least 80 %, even more preferably at least 90 % and most preferably equal to 100 % and/or
c) having a weight average molecular weight $M_w$ of below 1,000,000 g/mole, more preferably from 50,000 to 750,000 g/mole, even more preferably from 50,000 to 650,000 g/mole and most preferably from 100,000 to 300,000 g/mole and/or
d) being a homopolymer based on monomer units selected from the group consisting of diallyldialkyl ammonium salts; tertiary and quaternized amines; quaternized imines; acrylamide; methacrylamide; N,N-dimethyl acrylamide; acrylic acid; methacrylic acid; vinylsulfonic acid; vinyl pyrrolidone; hydroxyl ethyl acrylate; styrene; methyl methacrylate and vinyl acetate, preferably diallyldialkyl ammonium salts and acrylic acid, or
e) being a copolymer based on monomer units selected from diallyldialkyl ammonium salts and methacrylic acid and comonomer units selected from the group consisting of acrylamide; methacrylamide; N,N-dimethyl acrylamide; acrylic acid; methacrylic acid; vinylsulfonic acid; vinyl pyrrolidone; hydroxyl ethyl acrylate; styrene; methyl methacrylate; vinyl acetate and mixtures thereof, preferably the monomer units are selected from diallyldialkyl ammonium salts and methacrylic acid and comonomer units selected from acrylamide and acrylic acid.

**7.** The process according to claim 5, wherein the mono-, di-, or trivalent cations are selected from $Fe^{3+}$, $Al^{3+}$, $Mn^{2+}$ $Zn^{2+}$ and mixtures thereof.

**8.** The process according to any of claims 1 to 7, wherein at least 0.1 % of the accessible surface area of the mineral material is surface-treated with the at least one material which provides a cationic charge to the mineral material, preferably between 0.2 % and 50 %, more preferably between 0.5 % and 30 %, even more preferably between 0.7 % and 20 % and most preferably between 1.0 % and 10 %.

**9.** The process according to any of claims 1 to 8, wherein the process further comprises step e) of contacting the sludge and/or sediment to be dewatered of step a) or c) with at least one polymeric flocculation aid.

**10.** The process according to claim 9, wherein the polymeric flocculation aid of step e) has

a) a weight average molecular weight $M_w$ in the range from 100,000 to 10,000,00 g/mole, preferably in the range from 300,000 to 5,000,000 g/mole, more preferably in the range from 300,000 to 1,000,000 g/mole and most preferably in the range from 300,000 to 800,000 g/mole and/or
b) is non-ionic or ionic, preferably a cationic or anionic polymer selected from polyacrylamides, polyacrylates, poly(diallyldimethylammonium chloride), polyethyleneimines, polyamines, starches and mixtures thereof.

**11.** The process according to any one of claims 1 to 10, wherein step d) is performed by filtration, sedimentation and/or centrifugation and preferably by filtration.

**12.** The process according to any one of claims 1 to 11, wherein the process further comprises a step of adding an anionic polymer before step d), preferably after step c).

**13.** Use of a surface-treated mineral material for increasing the solids content of sludges and/or sediments, wherein the mineral material prior to surface-treatment has a tapped bulk density measured according to the standard method ISO 787/11 of the dry powder from 0.05 g/mL to 0.80 g/mL and wherein the mineral material is surface-treated with a material which provides a cationic charge to the mineral material.

**14.** A composite material comprising a surface-treated mineral material and impurities obtainable by the process according to any one of claims 1 to 12.

**15.** The composite material according to claim 14 having a water content of less than 90 wt.-%, based on the total weight of the composite material after filtration from the sludges and/or sediments and before drying, preferably below 80 wt.-%, more preferably below 60 wt.-%, even more preferably below 50 wt.-% and most preferably below 30 wt.-%,.

# EUROPEAN SEARCH REPORT

Application Number
EP 16 16 7585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 589 430 A1 (OMYA DEVELOPMENT AG [CH]) 8 May 2013 (2013-05-08)<br>* paragraph [0010] *<br>* paragraph [0044] - paragraph [0164] *<br>----- | 1-15 | INV.<br>C02F11/14<br><br>ADD.<br>C02F1/52<br>C02F1/56 |
| X,D | CA 2 734 310 A1 (SOANE MINING LLC [US]) 17 September 2011 (2011-09-17)<br>* paragraph [0011] - paragraph [0046] *<br>----- | 1-15 | |
| X | US 2005/261399 A1 (HUNKELER DAVID [FR]) 24 November 2005 (2005-11-24)<br>* paragraph [0020] - paragraph [0050] *<br>----- | 1-15 | |
| | | | TECHNICAL FIELDS SEARCHED (IPC) |
| | | | C02F |

The present search report has been drawn up for all claims

2

| Place of search | Date of completion of the search | Examiner |
|---|---|---|
| The Hague | 30 September 2016 | Châtellier, Xavier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 16 7585

This annex lists the patent family members relating to the patent documents cited in the above-mentioned European search report. The members are as contained in the European Patent Office EDP file on
The European Patent Office is in no way liable for these particulars which are merely given for the purpose of information.

30-09-2016

| Patent document cited in search report | Publication date | Patent family member(s) | Publication date |
|---|---|---|---|
| EP 2589430 A1 | 08-05-2013 | AU 2012331228 A1 | 01-05-2014 |
| | | CA 2852599 A1 | 10-05-2013 |
| | | CL 2014001101 A1 | 05-09-2014 |
| | | CN 103930200 A | 16-07-2014 |
| | | CO 6940406 A2 | 09-05-2014 |
| | | DK 2589430 T3 | 14-12-2015 |
| | | DK 2773453 T3 | 27-06-2016 |
| | | EP 2589430 A1 | 08-05-2013 |
| | | EP 2773453 A1 | 10-09-2014 |
| | | ES 2548911 T3 | 21-10-2015 |
| | | ES 2576960 T3 | 12-07-2016 |
| | | HR P20151207 T1 | 04-12-2015 |
| | | HR P20160660 T1 | 15-07-2016 |
| | | JP 2014533196 A | 11-12-2014 |
| | | KR 20140097240 A | 06-08-2014 |
| | | NZ 624723 A | 26-06-2015 |
| | | PT 2589430 E | 16-11-2015 |
| | | PT 2773453 E | 03-06-2016 |
| | | SG 10201506137S A | 29-09-2015 |
| | | SG 11201401974R A | 29-05-2014 |
| | | SI 2589430 T1 | 30-11-2015 |
| | | SI 2773453 T1 | 30-06-2016 |
| | | TW 201332904 A | 16-08-2013 |
| | | US 2014284519 A1 | 25-09-2014 |
| | | WO 2013064492 A1 | 10-05-2013 |
| CA 2734310 A1 | 17-09-2011 | CA 2734310 A1 | 17-09-2011 |
| | | US 2012061321 A1 | 15-03-2012 |
| | | US 2015096939 A1 | 09-04-2015 |
| US 2005261399 A1 | 24-11-2005 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2589430 A
- WO 2014180631 A
- CA 2734310
- EP 0273335 A
- US 20090270543 A1
- US 20090199741 A1
- US 6387176 B1
- EP 1136508 A1
- EP 1138697 A1
- EP 1189955 A1
- EP 0736553 A1
- EP 2641941 A1
- EP 0441037 A
- EP 15159304 A


### Non-patent literature cited in the description


- **PAPIRER ; SCHULTZ ; TURCHI.** *Eur. Polym. J.,* 1984, vol. 20 (12), 1155-1158
- **P. A. C. GANE et al.** Void Space Structure of Compressible Polymer Spheres and Consolidated Calcium Carbonate Paper-Coating Formulations. *Industrial and Engineering Chemistry Research,* 1996, vol. 35 (5), 1753-1764
- **E.L. BACK ; L.H. ALLEN.** Pitch Control, Wood Resin and Deresination. Tappi Press, 2000